# EUROPEAN PATENT APPLICATION

(11) **EP 4 529 126 A1**
(43) Date of publication of application: **26.03.2025**
(21) Application number: 23826337.0
(22) Date of filing: 19.06.2023
(51) Int. Cl.: H04L 49/109

(54) **COMPUTING SYSTEM AND COMMUNICATION METHOD**

(30) Priority: 23.06.2022 CN 202210719934; 30.08.2022 CN 202211049150
(71) Applicant: Huawei Technologies Co., Ltd., Shenzhen, Guangdong 518129 (CN)
(72) Inventor: GAO, Junen, Shenzhen, Guangdong 518129 (CN); LI, Xiaochu, Shenzhen, Guangdong 518129 (CN); XIA, Zhongjun, Shenzhen, Guangdong 518129 (CN); YUAN, Baojun, Shenzhen, Guangdong 518129 (CN)
(74) Representative: Huawei European IPR
(86) International application number: PCT/CN2023/101032
(87) International publication number: WO 2023/246689

(57) **Abstract**

A computing system and a communication method relate to the computer field and are provided. The computing system includes a plurality of fusion nodes and a plurality of switching nodes. A first fusion node in the plurality of fusion nodes includes a plurality of computing chips and at least one first switching chip. The at least one first switching chip is configured to implement communication connection between the plurality of computing chips. A first switching node in the plurality of switching nodes is coupled to the first fusion node through a connector. The first switching node is configured to implement communication connection between the first fusion node and another fusion node in the plurality of fusion nodes. The switching chip and the computing chips are deployed nearby. A mode of orthogonal connection and two-level data exchange is used between the plurality of fusion nodes and the plurality of switching nodes, to build a high-density system with high performance, a high bandwidth, and low latency.

## Description

This application claims priorities to Chinese Patent Application No. 202210719934.5, filed with the China National Intellectual Property Administration on June 23, 2022 and entitled "COMPUTING CLUSTER SYSTEM", and to Chinese Patent Application No. 202211049150.2, filed with the China National Intellectual Property Administration on August 30, 2022 and entitled "COMPUTING SYSTEM AND COMMUNICATION METHOD", both of which are incorporated herein by reference in their entireties.

### TECHNICAL FIELD

This application relates to the computer field, and in particular, to a computing system and a communication method.

### BACKGROUND

A bandwidth and latency are two key indicators of network communication. For a computing cluster that includes a plurality of computing devices, the bandwidth and the latency determine performance of the computing cluster system. Especially for application scenarios that are sensitive to the bandwidth and the latency, for example, high performance computing (high performance computing, HPC) and artificial intelligence (artificial intelligence, AI), computing chips in the computing devices need to complete a computing task in a cooperative manner, and there is a large amount of communication traffic between the computing chips. Therefore, high-bandwidth and low-latency communication can effectively improve processing performance of the computer cluster.

Usually, in computing-intensive applications such as the HPC and the AI, a plurality of computing devices often need to jointly participate in data processing, and the computing devices communicate with each other through a switch. Because there are a large quantity of computing devices, during actual deployment, a plurality of switches usually need to be disposed. In addition, a long physical network cable is used to implement communication connection between different computing devices and the switch. During actual application, if performance of the switch is stronger and a communication distance between devices is shorter, high-bandwidth and low-latency communication of the computer cluster is easier to be implemented. The performance of the switch is often measured by using a switching capacity. If a switching capacity of a switch is higher, a data processing capability is stronger, but design costs are also higher. The switching capacity of the switch is also referred to as a backplane bandwidth or a switching bandwidth, and is a maximum data throughput between an interface processor or interface card of the switch and a data bus. A unit thereof is Gbps or Tbps, where Gbps is gigabits per second, and Tbps is terabits per second.

However, because the switching capacity of the switch is limited, a bandwidth that can be provided by the switch to the computing chip is also limited. For example, the switching capacity of the switch is 12.8 Tbps, and the switch may provide 64*200 Gb ports, where 32 of the ports are downlink ports. When one switch is connected to 128 computing chips, only a bandwidth of 50 Gb can be allocated to each computing chip. For some computing chips having strong processing capabilities, the bandwidth of 50 Gb limits performance of the computing chips, resulting in performance bottlenecks of the computing chips. If a quantity of computing chips connected to the switch is reduced to reach a bandwidth requirement of the computing chips, an overall parallel computing capability of the computer cluster is reduced due to an excessively small quantity of computing chips. Exactly, with continuous development of HPC and AI technologies, the computer cluster having 128 computing chips cannot meet a requirement. As a result, the quantity of computing chips needs to be continuously increased, but the bandwidth provided by the switch is limited, causing a computing capability bottleneck of the computer cluster.

### SUMMARY

This application provides a computing system and a communication method, to resolve a computing capability bottleneck problem of a computer cluster.

According to a first aspect, a computing system is provided. The computing system includes a plurality of fusion nodes and a plurality of switching nodes. A first fusion node in the plurality of fusion nodes includes a plurality of computing chips and at least one first switching chip. The at least one first switching chip is configured to implement communication connection between the plurality of computing chips. A first switching node in the plurality of switching nodes is coupled to the first fusion node through a connector. The first switching node is configured to implement communication connection between the first fusion node and another fusion node in the plurality of fusion nodes.

The first switching node in the plurality of switching nodes is coupled to the first fusion node through the connector. The plurality of computing chips in the first fusion node are connected to the first switching chip. The switching chip and the computing chips are deployed nearby. A mode of orthogonal connection and two-level data exchange is used between the plurality of fusion nodes and the plurality of switching nodes, to build a high-density computing system with high performance, a high bandwidth, and low latency. In addition, to increase computing capability of the computing system, a bandwidth requirement caused by an increase in a quantity of computing chips may also be met by increasing a quantity of first switching chips, to increase an available bandwidth of each computing chip and further improve performance of the entire computing system.

Optionally, the computing system may be of a high-density chassis-cabinet integrated architecture. A cabinet in which the computing system is located is configured to not only place the fusion nodes and the switching nodes, but also implement communication connection between different fusion nodes and the switching nodes. Specifically, the computing system includes a chassis server and a cabinet server. The chassis server may include a rack server, a blade server, and a high-density server. The chassis server is usually of an open structure. Fusion nodes and switching nodes in each computing system may be placed in a same chassis. Compared with the rack server, the blade server and the high-density server have higher computing densities and can save more hardware space, but have smaller storage capacities. Therefore, a server type may be selected based on an actual application scenario. The cabinet server may be a rack-scale server. The cabinet server is of a totally-enclosed structure or a semi-enclosed structure. A same cabinet server may include one or more computing systems including fusion nodes and switching nodes.

In some embodiments, the chassis server may alternatively be placed in the cabinet server. In other words, a plurality of chassis servers may be placed in one cabinet server.

In a possible implementation, a connection manner between the first fusion node and the first switching node is orthogonal connection, and the connector includes a backplane-free orthogonal connector or an optical blind-mate connector.

Optionally, the backplane-free orthogonal connector may enable the switching node to be directly orthogonally connected to the fusion node. The switching node and the fusion node are directly connected and coupled instead of being connected through a cable or an optical fiber, to avoid a high cable connection error rate and high losses of cables or optical fibers that are caused by excessive cables or optical fibers. The optical blind-mate connector implements the orthogonal connection between the switching node and the fusion node by using an optical signal. The optical signal may further increase a bandwidth for communication between the switching node and the fusion node by using technologies of dense wavelength division multiplexing (DWDM: Dense Wavelength Division Multiplexing) and a high-density optical fiber connector. In this way, the available bandwidth of each computing chip is further increased, so that a scale of a computer cluster can be expanded, and performance of the computer cluster can be improved.

In a possible implementation, the connector includes a high-speed connector, and the orthogonal connection between the first fusion node and the first switching node is implemented by twisting the high-speed connector by 90 degrees.

Flexible connections between the switching node, the fusion node, and the high-speed connector are implemented through cables. Then, the high-speed connector is twisted by 90 degrees, so that the switching node is approximately directly orthogonal to the fusion node, and a needed cable length is very short. Because the cable length is reduced, a high cable connection error rate and high losses of cables or optical fibers that are caused by an excessively long length of cables or optical fibers may be mitigated.

In a possible implementation, a network topology structure including the plurality of computing chips, the at least one first switching chip, and the plurality of first switching nodes includes a network topology structure having no central switching node and a network topology structure having a central switching node.

Optionally, when the network topology structure is the network topology structure having no central switching node, the switching nodes are configured to implement communication connection between a plurality of computing systems. When the network topology structure is the network topology structure having the central switching node, the communication connection between the plurality of computing systems is implemented through the central switching node.

Optionally, the network topology structure having no central switching node may include but is not limited to a dragonfly (dragonfly or dragonfly+) network, a ring (torus) network, and the like. The network topology structure having the central switching node may include, but is not limited to, a fat-tree (fat-tree) network.

The dragonfly includes a plurality of groups. Each group is actually a sub-network that implements intra-group communication. Each group herein may be the foregoing first cabinet. The groups are connected through a link, and the link between the groups is narrow and similar to the broad body and narrow wings of a dragonfly. Therefore, a dragonfly network is used. In other words, the foregoing computing systems are connected through a link, and data communication between the computing systems is implemented through switching nodes in the computing systems. It should be understood that because narrow links are used between the groups included in the dragonfly network, a quantity of global links can be greatly reduced, and networking costs can be reduced.

Further, the groups of the dragonfly network may be connected in an all-to-all (all-to-all) manner. Such a network is also referred to as a dragonfly+ network. "All-to-all" means that there is at least one direct link between each group and each group in other groups of the dragonfly network. The dragonfly+ network group has a larger scale and supports more connected groups. A connection manner with minimum hops is adopted in the group, and an all-to-all structure or a flat butterfly structure is usually used. In this way, a length of the links can be further shortened, to provide low-latency communication.

The Torus network includes a plurality of nodes, each node may be the foregoing computing system, and wraparound links (wraparound links or toroidal boundaries) exist between the nodes. Due to the existence of the wraparound links, in the torus network, a node at a center of a topology is no longer different from a node at an edge of the topology. Each node has two neighboring nodes in each dimension. Therefore, a plurality of forwarding paths may exist between any two nodes, and reliability, a switching capacity, and scalability of the network are all high.

During specific implementation, in the foregoing network topology structure having no central switching node, that is, in the dragonfly network, the dragonfly+ network, and the torus network, a data packet needs to be forwarded between the computing systems through the switching nodes in each computing system. A forwarding path of the data packet may pass through one or more switching nodes. This is not specifically limited in this application.

The fat-tree network is a large-scale non-blocking network constructed by using a large quantity of low-performance switches and a multi-layer network. The fat-tree network may usually include a plurality of pods (pods) and a plurality of core switches connected to the pods. Each pod includes a plurality of layer 1 switches and a plurality of layer 2 switches. Each layer 1 switch is connected to one or more computing chips, and the layer 1 switch is configured to implement data communication between the computing chips. Each layer 2 switch is connected to one or more layer 1 switches, and the layer 2 switch is configured to implement data communication between the layer 1 switches. Each core switch is connected to one or more pods, and the core switch is configured to implement data communication between the pods. Certainly, the core switches may also form a multi-layer sub-network, and data communication between sub-networks is implemented by an upper-layer sub-network, and so on. In this way, a plurality of parallel paths may exist between every two compute nodes in the fat-tree network. Therefore, fault tolerance performance of the network is good. In addition, traffic can be properly distributed in the pods to avoid overload. It should be understood that the fat-tree network is a non-blocking network technology, and a large quantity of switching chips are used to construct a large-scale non-blocking network. Theoretically, a bandwidth of the network does not converge from bottom to top, there are a plurality of data communication paths, and there is always a path that can enable a communication bandwidth to reach a bandwidth requirement. A problem that performance of a computing chip is limited by a network bandwidth is further resolved, and performance of a computer cluster is improved.

During specific implementation, in the foregoing network topology structure having the central switching node, that is, in the fat-tree network, each computing system may establish communication connection to one or more central switching nodes, and a data packet needs to be forwarded between the computing systems through the one or more central switching nodes.

It should be understood that a network topology structure including the plurality of fusion nodes and the plurality of switching nodes may further include other large-scale network topology structures that are commonly used and that are sensitive to a bandwidth and latency. Examples are not described one by one herein. This is not specifically limited in this application.

In the foregoing implementation, for the plurality of fusion nodes and the plurality of switching nodes in the computing system provided in this application, an appropriate network topology structure may be selected based on a service requirement in an actual application scenario to establish communication connection between the fusion nodes and the switching nodes, so that the computing system provided in this application is easily implemented, is highly practicable, and is widely used in various scenarios.

In a possible implementation, quantities of the plurality of fusion nodes and the plurality of switching nodes in the computing system are determined based on at least one of a bandwidth requirement of the computing chip, a quantity of ports and a switching capacity of the first switching chip, and a quantity of ports and a switching capacity of the first switching node.

Optionally, the fusion nodes may be deployed in a first case, and the switching nodes may be deployed in a second case. The case may refer to a chassis or another case in which fittings can be placed and fixed and the fittings in the chassis can be supported and protected. The case may include a housing, a support, various switches and an indicator that are on a panel, and the like. The case may be made of steel plates and plastics. This is not specifically limited in this application.

Further, after the quantities of the fusion nodes and the switching nodes in the computing system are determined, a quantity of second computing chips in each switching node and quantities of computing chips and first switching chips in each fusion node may be determined in combination with various environmental conditions in an actual application scenario, for example, sizes of the first case and the second case, a quantity of cases that can be mounted in the computing system, and a parallel processing capability that is needed by a user and that is of the computing system. The quantity of cases that can be mounted in the computing system refers to a quantity of cases that can be placed in a cabinet or rack in which the computing system is located.

In the foregoing implementation, the quantities of the fusion nodes and the switching nodes in the computing system are determined based on the bandwidth requirement of the computing chip, the quantity of ports and the switching capacity of the first switching chip, and the quantity of ports and the switching capacity of the first switching node. Such a network scale can ensure not only an available bandwidth of each computing chip and a scale of the entire computing system, but also a plurality of parallel paths between the computing chips. Therefore, fault tolerance performance of the network is good, and traffic can be properly distributed in the pods to avoid overload.

In a possible implementation, the at least one first switching chip includes a first switching chip on a first switching plane and a first switching chip on a second switching plane, the first switching node includes a plurality of second switching chips, the plurality of second switching chips include a second switching chip on the first switching plane and a second switching chip on the second switching plane, and the first switching plane and the second switching plane bear different services.

Simply speaking, a network including the first switching chips and the second switching chips in the computing system may include a plurality of switching planes, a part of the first switching chips and a part of the second switching chips are responsible for data communication on the first switching plane, and the other part of the first switching chips and the other part of the second switching chips are responsible for data communication on the second switching plane. It should be understood that the first switching plane and the second switching plane do not specify that technical solutions of this application support only two switching planes, but intend to express that the technical solutions of this application support different switching planes. Exactly, more than two switching planes may be further supported. A quantity of switching planes may be determined based on an actual application scenario.

Optionally, the first switching plane and the second switching plane bear the different services. For example, for a user, a service 1 uses the first switching plane, and a service 2 uses the second switching plane, to avoid a network delay caused by a service conflict. A plurality of switching planes may be used to enable the computer cluster to provide a larger bandwidth capability for the user, to improve user experience.

Optionally, the first switching plane and the second switching plane may be switching planes with network isolation. Specifically, considering service security, to implement network isolation of the service 1 and the service 2 of the user and avoid a network security problem, the cabinet provided in this application may be used to form a fat-tree network of two or more layers, and a corresponding switching plane is allocated to each switching chip. In this way, the user may implement data communication of the service 1 on the first switching plane, and implement data communication of the service 2 on the second switching plane. No data communication is performed between the two switching planes. To be specific, the first switching chip and the second switching chip on the first switching plane do not process a data packet of the second switching plane, and the first switching chip and the second switching chip on the second switching plane do not process a data packet of the first switching plane, to implementing network isolation of the first switching plane and the second switching plane. It should be understood that the foregoing example is used for description. This is not specifically limited in this application.

Optionally, the first switching plane and the second switching plane use different communication protocols. For example, the service 1 needs to use a communication protocol 1, and the service 2 needs to use a communication protocol 2. The cabinet provided in this application is used, and a corresponding switching plane is allocated to each switching chip. The first switching plane uses the communication protocol 1 to process the service 1, and the second switching plane uses the communication protocol 2 to process the service 2. It should be understood that the foregoing example is used for description. This is not specifically limited in this application.

It may be understood that the computing chip may be connected to first switching chips on different switching planes based on service requirements. There is no communication connection between the first switching chips on the different switching planes, and there is no communication connection between second switching chips on the different switching planes either, so that network isolation of the different switching planes can be implemented. The different switching planes can bear the different services and use the different communication protocols, to meet more diversified requirements of the user and improve user experience.

Optionally, based on the user requirement, the computing system may further include more switching planes such as a third switching plane and a fourth switching plane, and each switching plane may further include more first switching chips and second switching chips. This is not specifically limited in this application.

In the foregoing implementation, respective corresponding switching planes may be allocated to the plurality of first switching chips and the plurality of second switching chips in the computing system, so that the computing system can bear network communication of a plurality of switching planes, and meet a network isolation requirement of the user, a plurality of service processing requirements, and a plurality of communication protocol requirements. Therefore, the computing system provided in this application is widely applicable to more scenarios, and user experience is improved.

In a possible implementation, after the computing chip, the first switching chip, and the second switching chip establish communication connection, the first switching chip and the second switching chip each may generate a routing table or a MAC address table by using a forwarding algorithm based on a connection relationship. The routing table or the MAC address table may include a plurality of entries, each entry may represent a forwarding path, and each entry may include at least a source address, a destination address, and a corresponding next-hop address. After receiving a data packet sent by the computing chip, the first switching chip may query the routing table or the MAC address table based on a source address and a destination address that are carried in the data packet to obtain a forwarding path of the data packet, determine a next-hop address, and forward the data packet to the next-hop address.

If the first switching chip or the second switching chip is a switching chip of a layer 2 switch (a link layer switch), the MAC address table may be generated by using a switch forwarding algorithm such as an ARP. The source address and the destination address may be MAC addresses. If the first switching chip or the second switching chip is a switching chip of a layer 3 switch (a network layer switch), the routing table may be generated by using a routing algorithm such as a RIP and a BGP. The source address and the destination address may be IP addresses. This is not specifically limited in this application.

A forwarding path recorded in the routing table or the MAC address table is determined based on a connection relationship between the first switching chip and the computing chip.

Optionally, in each fusion node, each first switching chip may establish communication connection to all computing chips, and communication between the computing chips in each fusion node may be implemented through any first switching chip 120 in the same fusion node. A forwarding path of a data packet between the computing chips in each fusion node may include any first switching chip 120. Each switching node establishes communication connection to all the fusion nodes through the connector, so that data communication may be implemented between the fusion nodes through any second switching chip, and a forwarding path of a data packet between the fusion nodes may include any second switching chip.

Optionally, each first switching chip may establish communication connection to a part of the computing chips, and a forwarding path may be determined for data communication between the plurality of computing chips in the fusion node based on a first switching chip connected to the computing chips. If a transmitter and a receiver are connected to a same first switching chip, the first switching chip may implement data communication between the first switching chip and the part of the computing chips based on the routing table. The forwarding path of the data packet may include the source address, an address of the same first switching chip, and the destination address.

If the transmitter and the receiver are connected to different first switching chips, and there is no direct connection between the two first switching chips, data communication between the transmitter and the receiver may be implemented through a second switching chip connected to the first switching chips connected to the transmitter and the receiver. The forwarding path of the packet may include the source address, an address of a first switching chip 1, an address of a second switching chip 1, an address of a first switching chip 2, and the destination address. The first switching chip 1 is connected to a computing chip located at the source address, the first switching chip 2 is connected to a computing chip located at the destination address, and the second switching chip 1 is connected to the first switching chip 1 and the first switching chip 2.

If the transmitter and the receiver are connected to different first switching chips, and there is a direct connection between the two first switching chips, data communication may be implemented through the two first switching chips connected to transmitter and the receiver. The forwarding path of the packet may include the source address, a first switching chip 1, a first switching chip 2, and the destination address.

Simply speaking, if each computing chip is connected to only one first switching chip, a data packet generated by the computing chip may be directly sent to the first switching chip connected to the computing chip. If each computing chip is connected to a plurality of first switching chips, after generating a data packet, the computing chip may send, based on a network status fed back by at least one first switching chip connected to the computing chip, the data packet to a first switching chip with a better network status, to forward the packet. Alternatively, the computing system may include a management node. The management node may determine, based on load balancing or another network management algorithm, a first switching chip that forwards the data packet. This is not specifically limited in this application. Alternatively, the computing chip may select, based on an identifier carried in the data packet, a first switching chip that is in first switching chips connected to the computing chip and that can process the data packet carrying the identifier, to forward the data packet. For example, the identifier may be an identifier of the first forwarding plane. In this case, only a first switching chip on the first forwarding plane can forward the data packet. This is not specifically limited in this application.

In the foregoing implementation, in a case in which data packet transmission is not affected, in the system, a bandwidth that can be allocated to each computing chip may be increased by reducing a quantity of computing chips connected to the first switching chip, and a scale of the computer cluster may be expanded by increasing a quantity of first switching chips, to resolve a performance bottleneck problem of the computer cluster.

In a possible implementation, if the quantity of the switching nodes is increased, when the fusion nodes are placed in a horizontal direction and the switching nodes are placed in a vertical direction, the quantity of the switching nodes may be increased in the horizontal direction, and a length of the first case in which the fusion nodes are located may be adaptively increased. In this way, an expanded first case can be connected to a larger quantity of switching nodes through the backplane-free orthogonal connector. Similarly, if the quantity of the fusion nodes is increased, the quantity of the fusion nodes may be increased in the vertical direction, and a length of the second case in which the switching nodes are located is adaptively increased, so that an expanded second case can be connected to a larger quantity of fusion nodes through the backplane-free orthogonal connector.

Certainly, if the fusion nodes are placed in the vertical direction and the switching nodes are placed in the horizontal direction, the quantity of the switching nodes may be increased in the vertical direction, and the quantity of the fusion nodes may be increased in the horizontal direction. Details are not described herein again.

In the foregoing implementation, the fusion nodes are orthogonally connected to the switching nodes. When the scale of the computing system is expanded, only the quantity of the switching nodes or fusion nodes needs to be horizontally or vertically increased, so that the computing system provided in this application has high scalability and is highly practicable.

In a possible implementation, the computing system may include one or more symmetric multi-processing (symmetrical multi-processing, SMP) systems, and each fusion node may also include one or more SMP systems. The SMP system refers to a group of processor sets aggregated on a server, and the processor set includes a plurality of CPUs. In addition, processors share a memory and other resources on a server. For example, a bus structure is shared, so that workloads can be evenly allocated to all available processors. To be specific, one SMP system corresponds to one OS domain and a plurality of computing chips. These computing chips may be computing chips in a same fusion node, or may be computing chips in different fusion nodes. This is not specifically limited in this application.

For example, one computing system includes 16 fusion nodes. In this case, the 16 fusion nodes may include 16 SMP systems, where one fusion node corresponds to one SMP system. Alternatively, the 16 fusion nodes include eight SMP systems, where two fusion nodes correspond to one SMP system. Alternatively, the 16 fusion nodes are a fusion node 1 to a fusion node 16, where the fusion node 1 includes two SMP systems, the fusion node 2 and the fusion node 3 correspond to one SMP system, and the fusion nodes 4 to 16 correspond to one SMP system. The foregoing example is used for description. This is not specifically limited in this application.

In the foregoing implementation, the computing chips are interconnected through the first switching node and the second switching node. Therefore, computing chips in each SMP system may be flexibly combined based on a service requirement of an actual application scenario, so that the computing system provided in this application can meet a use requirement of a plurality of SMP systems of the user, and improve user experience.

According to a second aspect, a communication method is provided. The method is applied to a computing system. The computing system includes a plurality of fusion nodes and a plurality of switching nodes. A first switching node in the plurality of switching nodes is coupled to a first fusion node through a connector. The first switching node is configured to implement communication connection between the first fusion node and another fusion node in the plurality of fusion nodes. The first fusion node in the plurality of fusion nodes includes a plurality of computing chips and at least one first switching chip. The at least one first switching chip is configured to implement communication connection between the plurality of computing chips. The method includes the following steps: A first computing chip of the first fusion node generates a data packet. A destination address of the data packet is an address of a second computing chip. The first fusion node forwards the data packet based on an address of a fusion node in which the second computing chip is located.

The first switching node in the plurality of switching nodes is coupled to the first fusion node through the connector, and the plurality of computing chips in the first fusion node are connected to the first switching chip. In this case, even when a quantity of computing chips connected to the first switching chip is reduced, a quantity of computing chips in the entire computing system may be increased by increasing a quantity of first switching chips. After the quantity of computing chips connected to each first switching chip is reduced, a bandwidth that can be allocated to each computing chip may be increased. In this way, an available bandwidth of each computing chip is increased while a scale of a computer cluster is expanded, to resolve a performance bottleneck problem of the computer cluster.

In a possible implementation, a specific step procedure in which the first fusion node forwards the data packet based on the address of the fusion node in which the second computing chip is located may be as follows: When the second computing chip is a computing chip in the first fusion node, the first fusion node forwards the data packet to the destination address through the at least one first switching chip. When the second computing chip is a computing chip in a second fusion node, the first fusion node sends the data packet to the first switching node in the plurality of switching nodes, and the first switching node sends the data packet to the second fusion node.

In a possible implementation, a connection manner between the plurality of fusion nodes and the plurality of switching nodes is orthogonal connection, and the connector includes a backplane-free orthogonal connector or an optical blind-mate connector.

In a possible implementation, the connector includes a high-speed connector, and the orthogonal connection between the plurality of fusion nodes and the plurality of switching nodes is implemented by twisting the high-speed connector by 90 degrees.

In a possible implementation, a network topology structure including the plurality of fusion nodes and the plurality of switching nodes includes a network topology structure having no central switching node and a network topology structure having a central switching node.

In a possible implementation, when the network topology structure is the network topology structure having no central switching node, communication connection between a plurality of computing systems is implemented through the switching nodes. When the network topology structure is the network topology structure having the central switching node, the communication connection between the plurality of computing systems is implemented through the central switching node.

In a possible implementation, quantities of the fusion nodes and the switching nodes in the computing system are determined based on a bandwidth requirement of the computing chip, a quantity of ports and a switching capacity of the first switching chip, and a quantity of ports and a switching capacity of the first switching node.

In a possible implementation, the at least one first switching chip includes a first switching chip on a first switching plane and a first switching chip on a second switching plane, the first switching node includes a plurality of second switching chips, the plurality of second switching chips include a second switching chip on the first switching plane and a second switching chip on the second switching plane, and the first switching plane and the second switching plane bear different services.

In a possible implementation, the first switching plane and the second switching plane are switching planes with network isolation, or the first switching plane and the second switching plane use different communication protocols.

According to a third aspect, a fusion node is provided. The fusion node may be applied to a computing system. The computing system includes a plurality of fusion nodes and a plurality of switching nodes. A first switching node in the plurality of switching nodes is coupled to a first fusion node through a connector. The first switching node is configured to implement communication connection between the first fusion node and another fusion node in the plurality of fusion nodes. The first fusion node in the plurality of fusion nodes includes a plurality of computing chips and at least one first switching chip. The at least one first switching chip is configured to implement communication connection between the plurality of computing chips. The fusion node includes a computing unit and a first switching unit. The computing unit is configured to generate a data packet. A source address of the data packet is an address of a first computing chip in the fusion node, and a destination address is an address of a second computing chip. The first switching unit is configured to forward the data packet based on an address of a fusion node in which the second computing chip is located.

The first switching node in the plurality of switching nodes is coupled to the first fusion node through the connector, and the plurality of computing chips in the first fusion node are connected to the first switching chip. In this case, even when a quantity of computing chips connected to the first switching chip is reduced, a quantity of computing chips in the entire computing system may be increased by increasing a quantity of first switching chips. After the quantity of computing chips connected to each first switching chip is reduced, a bandwidth that can be allocated to each computing chip may be increased. In this way, an available bandwidth of each computing chip is increased while a scale of a computer cluster is expanded, to resolve a performance bottleneck problem of the computer cluster.

In a possible implementation, the first switching unit is configured to: when the second computing chip is a computing chip in the first fusion node, the first fusion node forwards the data packet to the destination address through the at least one first switching chip; and when the second computing chip is a computing chip in a second fusion node, the first fusion node sends the data packet to the first switching node in the plurality of switching nodes, and the first switching node sends the data packet to the second fusion node.

In a possible implementation, a connection manner between the plurality of fusion nodes and the plurality of switching nodes is orthogonal connection, and the connector includes a backplane-free orthogonal connector or an optical blind-mate connector.

In a possible implementation, the connector includes a high-speed connector, and the orthogonal connection between the plurality of fusion nodes and the plurality of switching nodes is implemented by twisting the high-speed connector by 90 degrees.

In a possible implementation, a network topology structure including the plurality of fusion nodes and the plurality of switching nodes includes a network topology structure having no central switching node and a network topology structure having a central switching node.

In a possible implementation, when the network topology structure is the network topology structure having no central switching node, communication connection between a plurality of computing systems is implemented through the switching nodes. When the network topology structure is the network topology structure having the central switching node, the communication connection between the plurality of computing systems is implemented through the central switching node.

In a possible implementation, quantities of the fusion nodes and the switching nodes in the computing system are determined based on a bandwidth requirement of the computing chip, a quantity of ports and a switching capacity of the first switching chip, and a quantity of ports and a switching capacity of the first switching node.

In a possible implementation, the at least one first switching chip includes a first switching chip on a first switching plane and a first switching chip on a second switching plane, the first switching node includes a plurality of second switching chips, the plurality of second switching chips include a second switching chip on the first switching plane and a second switching chip on the second switching plane, and the first switching plane and the second switching plane bear different services.

In a possible implementation, the first switching plane and the second switching plane are switching planes with network isolation, or the first switching plane and the second switching plane use different communication protocols.

According to a fourth aspect, a switching node is provided. The switching node may be applied to a computing system. The computing system includes a plurality of fusion nodes and a plurality of switching nodes. A first switching node in the plurality of switching nodes is coupled to a first fusion node through a connector. The first switching node is configured to implement communication connection between the first fusion node and another fusion node in the plurality of fusion nodes. The first fusion node in the plurality of fusion nodes includes a plurality of computing chips and at least one first switching chip. The at least one first switching chip is configured to implement communication connection between the plurality of computing chips. The switching node includes a second switching unit. The second switching unit is configured to receive a data packet sent by the first fusion node. A source address of the data packet is an address of a first computing chip in the first fusion node, and a destination address is an address of a second computing chip in a second fusion node. The second switching unit is configured to forward the data packet to the second fusion node based on the destination address.

The first switching node in the plurality of switching nodes is coupled to the first fusion node through the connector, and the plurality of computing chips in the first fusion node are connected to the first switching chip. In this case, even when a quantity of computing chips connected to the first switching chip is reduced, a quantity of computing chips in the entire computing system may be increased by increasing a quantity of first switching chips. After the quantity of computing chips connected to each first switching chip is reduced, a bandwidth that can be allocated to each computing chip may be increased. In this way, an available bandwidth of each computing chip is increased while a scale of a computer cluster is expanded, to resolve a performance bottleneck problem of the computer cluster.

In a possible implementation, a connection manner between the plurality of fusion nodes and the plurality of switching nodes is orthogonal connection, and the connector includes a backplane-free orthogonal connector or an optical blind-mate connector.

In a possible implementation, the connector includes a high-speed connector, and the orthogonal connection between the plurality of fusion nodes and the plurality of switching nodes is implemented by twisting the high-speed connector by 90 degrees.

In a possible implementation, a network topology structure including the plurality of fusion nodes and the plurality of switching nodes includes a network topology structure having no central switching node and a network topology structure having a central switching node.

In a possible implementation, when the network topology structure is the network topology structure having no central switching node, communication connection between a plurality of computing systems is implemented through the switching nodes. When the network topology structure is the network topology structure having the central switching node, the communication connection between the plurality of computing systems is implemented through the central switching node.

In a possible implementation, quantities of the fusion nodes and the switching nodes in the computing system are determined based on a bandwidth requirement of the computing chip, a quantity of ports and a switching capacity of the first switching chip, and a quantity of ports and a switching capacity of the first switching node.

In a possible implementation, the at least one first switching chip includes a first switching chip on a first switching plane and a first switching chip on a second switching plane, the first switching node includes a plurality of second switching chips, the plurality of second switching chips include a second switching chip on the first switching plane and a second switching chip on the second switching plane, and the first switching plane and the second switching plane bear different services.

In a possible implementation, the first switching plane and the second switching plane are switching planes with network isolation, or the first switching plane and the second switching plane use different communication protocols.

According to a fifth aspect, a computing system is provided. The computing system includes modules configured to perform the communication method according to any one of the foregoing aspects or the possible implementations of the aspects.

According to a sixth aspect, a computing device is provided. The computing device includes a processor and a memory. The memory is configured to store code. The processor is configured to execute the code to implement functions of operation steps performed by the fusion node described in the second aspect.

According to a seventh aspect, a computing device is provided. The computing device includes a processor and a power supply circuit. The power supply circuit is configured to supply power to the processor. The processor is configured to implement functions of the operation steps performed by the fusion node described in the second aspect.

According to an eighth aspect, a communication device is provided. The communication device includes a processor and a memory. The memory is configured to store code. The processor is configured to execute the code to implement functions of operation steps performed by the switching node described in the second aspect.

According to a ninth aspect, a computer cluster is provided, including a plurality of computing systems. There is communication connection between the plurality of computing systems, and a task is processed in a cooperative manner. Each of the plurality of computing systems may be the computing system described in the first aspect. The plurality of computing systems may establish communication connection to a central switching node (for example, the foregoing second cabinet), and each central switching node is configured to implement communication connection between the computing systems. A network topology structure including the plurality of computing system and a plurality of central switching nodes may be the network topology structure having the central switching node in the foregoing content, for example, a fat-tree network.

According to a tenth aspect, a computer cluster is provided, including a plurality of computing systems. There is communication connection between the plurality of computing systems, and a task is processed in a cooperative manner. Each of the plurality of computing systems may be the computing system described in the first aspect. The communication connection between the computing systems is implemented through switching nodes in the computing systems. A network topology structure including the plurality of computing systems may be the network topology structure having no central switching node in the foregoing content, for example, a dragonfly (dragonfly or dragonfly+) network, a ring (torus) network, or the like.

According to an eleventh aspect, a computer storage medium is provided. A computer-readable storage medium stores instructions. When the instructions are run on a computer, the computer is enabled to perform the method according to any one of the foregoing aspects.

Based on the implementations provided in the foregoing aspects, combination may further be performed in this application to provide more implementations.

### BRIEF DESCRIPTION OF DRAWINGS

FIG. 1 is a schematic diagram of a structure of a computing system according to this application;
FIG. 2 is a schematic diagram of a structure of a computing system in an application scenario according to this application;
FIG. 3 is a schematic diagram of connection relationships between fusion nodes and a switching node according to this application;
FIG. 4 is a schematic diagram of a structure of a four-layer fat-tree network according to this application;
FIG. 5 is a schematic diagram of a structure of a computing system in an application scenario according to this application;
FIG. 6A and FIG. 6B are a schematic diagram of a structure of a computing system in an application scenario according to this application;
FIG. 7 is a schematic diagram of a step procedure of a communication method in an application scenario according to this application;
FIG. 8 is a schematic diagram of a step procedure of a communication method in another application scenario according to this application;
FIG. 9 is a schematic diagram of a structure of a computing system according to this application; and
FIG. 10 is a schematic diagram of a structure of a computing system according to this application.

### DESCRIPTION OF EMBODIMENTS

To resolve the foregoing performance bottleneck problem of the computer cluster that is caused by a limited switching capacity of a switching node, this application provides a computing system, including a plurality of fusion nodes and a plurality of switching nodes. A first fusion node in the plurality of fusion nodes includes a plurality of computing chips and at least one first switching chip. The at least one first switching chip is configured to implement communication connection between the plurality of computing chips. A first switching node is configured to implement communication connection between the first fusion node and another fusion node in the plurality of fusion nodes. The first switching node in the plurality of switching nodes is coupled to the first fusion node through a connector, and the plurality of computing chips in the first fusion node are connected to the first switching chip. The coupling indicates that the first switching node is directly connected to the first fusion node through the connector, or the coupling indicates that the first switching node is indirectly connected to the first fusion node through the connector.

In this case, even when a quantity of computing chips connected to the first switching chip is reduced, a quantity of computing chips in the entire computing system may be increased by increasing a quantity of first switching chips. After the quantity of computing chips connected to each first switching chip is reduced, a bandwidth that can be allocated to each computing chip may be increased. In this way, an available bandwidth of each computing chip is increased while a scale of the computer cluster is expanded, to resolve the performance bottleneck problem of the computer cluster.

It should be noted that the computing system may be of a high-density chassis-cabinet integrated architecture. A cabinet in which the computing system is located is configured to not only place the fusion nodes and the switching nodes, but also implement communication connection between different fusion nodes and the switching nodes. Specifically, the computing system includes a chassis server and a cabinet server. The chassis server may include a rack server, a blade server, and a high-density server. The chassis server is usually of an open structure. Fusion nodes and switching nodes in each computing system may be placed in a same chassis. Compared with the rack server, the blade server and the high-density server have higher computing densities and can save more hardware space, but have smaller storage capacities. Therefore, a server type may be selected based on an actual application scenario. The cabinet server may be a rack-scale server. The cabinet server is of a totally-enclosed structure or a semi-enclosed structure. A same cabinet server may include one or more computing systems including fusion nodes and switching nodes.

Optionally, the chassis server may alternatively be placed in the cabinet server. In other words, a plurality of chassis servers may be placed in one cabinet server.

To better understand this application, descriptions are provided below by using an example in which a server is a cabinet server, that is, fusion nodes and switching nodes in the computing system are placed in a same cabinet.

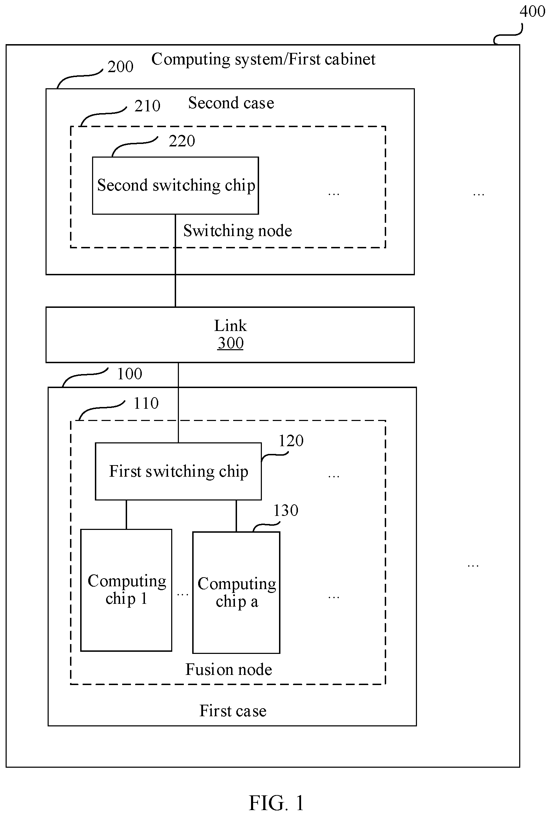

FIG. 1 is a schematic diagram of a structure of a computing system 400 according to this application. The computing system is any server in a computer cluster, and may be specifically a cabinet server or a chassis server. In the example shown in FIG. 1, the computing system is a cabinet server, namely, a first cabinet 400. The first cabinet 400 may include a first case 100 and a second case 200, and communication connection may be established between the first case 100 and the second case 200 through a link 300. There may be one or more first cabinets 400, first cases 100, and second cases 200. This is not specifically limited in this application. In addition, the first cabinet 400 may further include a power supply module, a management module, a fan, and the like. This is not specifically limited in this application.

The case may refer to a chassis or another case that has the functions of placing and fixing fittings and supporting and protecting the fittings in the chassis. The case may include a housing, a support, various switches and an indicator that are on a panel, and the like. The case may be made of steel plates and plastics. This is not specifically limited in this application. In this embodiment of this application, each first case 100 includes one fusion node 110, and each second case 200 includes one switching node 210.

The fusion node 110 protected by the first case 100 is a computing device having a computing capability. The computing device may be used as a compute node in a computing system cluster to provide the computing capability for the computing system cluster. The fusion node 110 includes at least a chip and an interface, and may further include more components based on an actual application scenario, for example, a mainboard, a memory, a hard disk, a heat sink, a video card, and a PCIe. This is not specifically limited in this application.

In this embodiment of this application, the chip of the fusion node 110 may include a computing chip 130 and a first switching chip 120. There may be one or more computing chips 130 and first switching chips 120. The computing chip 130 may be a chip that processes a computing task in the computing system cluster, for example, a central processing unit (central processing unit, CPU), a graphics processing unit (graphics processing unit, GPU), a neural network processing unit (neural network processing unit, NPU), or a data processing unit (data processing unit, DPU). This is not specifically limited in this application. The computing chip 130 may be a computing chip used for processing a service in a cluster in an application scenario such as HPC and AI, or may be a storage chip used by a storage node in a distributed storage scenario. This is not specifically limited in this application.

The first switching chip 120 may have functions of performing transmission of an electrical signal and/or an optical signal and transmission of data based on a rule, and may provide an exclusive electrical signal or optical signal path for any two computing chips 130 connected to the first switching chip 120. This is not specifically limited in this application.

The first switching chip 120 may store a routing table (routing table) or a media access control (media access control, MAC) address table. The routing table or the MAC address table may include a plurality of entries, and each entry may represent a forwarding path. Each entry may include at least a source address, a destination address, and a corresponding next-hop address. After receiving a data packet sent by the computing chip 130, the first switching chip 120 may query the routing table or the MAC address table based on a source address and a destination address that are carried in the data packet to obtain a forwarding path of the data packet, determine a next-hop address, and forward the data packet to the next-hop address.

During specific implementation, if the first switching chip 120 is a switching chip of a layer 2 switch (a link layer switch), the MAC address table may be generated by using a switch forwarding algorithm such as an address resolution protocol (address resolution protocol, ARP). The source address and the destination address may be MAC addresses. If the first switching chip 120 is a switching chip of a layer 3 switch (a network layer switch), the routing table may be generated by using a routing algorithm such as a routing information protocol (routing information protocol, RIP) or a border gateway protocol (border gateway protocol, BGP). The source address and the destination address may be IP addresses. This is not specifically limited in this application.

Optionally, one first switching chip 120 may be connected to each computing chip 130. For example, the first case includes a computing chip 1 to a computing chip 32, and further includes a first switching chip 1 and a first switching chip 2. In this case, the first switching chip 1 may establish communication connection to the computing chips 1 to 32, and the first switching chip 2 also establishes communication connection to the computing chips 1 to 21. It should be understood that the foregoing example is used for description. This is not specifically limited in this application.

Optionally, one first switching chip 120 may alternatively be connected to a part of the computing chips 130. For example, the first case includes the computing chip 1 to the computing chip 32, and further includes the first switching chip 1 and the first switching chip 2. In this case, the first switching chip 1 may establish communication connection to the computing chips 1 to 16, and the first switching chip 2 establishes communication connection to the computing chips 17 to 32. During specific implementation, a quantity of computing chips 130 connected to each first switching chip 120 may be determined based on a bandwidth requirement of the computing chip in the first case 100 and a quantity of ports and a switching capacity of the first switching chip. For example, the bandwidth requirement of the computing chip is 100 Gb, the switching capacity of the first switching chip is 12.8 Tbps, and 32 downlink ports can be provided. In this case, when each port can provide a maximum bandwidth of 200 Gb, and the quantity of computing chips connected to the first switching chip does not exceed 64, the bandwidth requirement of the computing chip: 100 Gb, can be met. Further, the quantity of computing chips connected to each first switch may be determined with reference to other conditions such as a capacity of the cabinet and a computer scale requirement of a user. It should be understood that the foregoing example is used for description. This is not specifically limited in this application.

Optionally, communication connection may also be established between the first switching chips 120. This is not specifically limited in this application.

It should be noted that the first switching chip 120 and the computing chip 130 are in a same case. Optionally, communication connection may be established between the first switching chip 120 and the computing chip 130 through an internal bus of a computing device, for example, a peripheral component interconnect express (Peripheral Component Interconnect Express, PCIe) bus, an extended industry standard architecture (extended industry standard architecture, EISA) bus, a unified bus (unified bus, Ubus or UB), a computer express link (compute express link, CXL), or a cache coherent interconnect for accelerators (cache coherent interconnect for accelerators, CCIX). This is not specifically limited in this application.

The switching node 210 may be a network device that forwards the electrical signal or the optical signal. The switching node includes at least a second switching chip 220 and the second case. There may be one or more second switching chips 220. During specific implementation, the second case of the switching node 210 and the first case of the fusion node 110 are different cases, but the first case and the second case are deployed in a same first cabinet.

The second switching chip 220 may have functions of performing transmission of the electrical signal and/or the optical signal and transmission of the data based on a forwarding rule, and may provide an exclusive electrical signal or optical signal path for any two computing chips 130 connected to the switching chip. This is not specifically limited in this application. It should be noted that the first switching chip 120 and the second switching chip 220 may be switching chips of a same model, type, or specification or of different models, types, or specifications. Specifically, an appropriate first switching chip 120 and an appropriate second switching chip 220 may be selected based on an actual application scenario. The second switching chip 220 may also store a routing table or a MAC address table. The routing table or the MAC address table may include a plurality of entries, each entry may represent a forwarding path, and each entry may include at least a source address, a destination address, and a corresponding next-hop address. After receiving the data packet, the second switching chip 220 may query the routing table or the MAC address table based on the source address and the destination address that are carried in the data packet to obtain a forwarding path of the data packet, determine a next-hop address, and forward the data packet to the next-hop address. For details, refer to the descriptions of the first switching chip 120 in the foregoing content. Details are not described herein again.

In a possible implementation, the computer cluster may include one or more first cabinets, each first cabinet may include at least one switching node 210 and at least one fusion node 110, each fusion node 110 includes at least one computing chip 130 and at least one first switching chip 120, and each switching node 210 may include at least one second switching chip 220.

In this embodiment of this application, data exchange between computing chips in a fusion node 110 may be implemented through a first switching chip 120 in a same case, and data exchange between different fusion nodes 110 may be implemented through a second switching chip 220 of a switching node 210 in a same first cabinet. Each first switching chip is connected to a plurality of computing chips, and each first switching node is connected to a plurality of first switching chips. In this case, even when a quantity of computing chips connected to the first switching chip is reduced, a quantity of computing chips in the entire computing cluster may be increased by increasing a quantity of first switching chips. After the quantity of computing chips connected to each first switching chip is reduced, a bandwidth that can be allocated to each computing chip may be increased. In this way, an available bandwidth of each computing chip is increased while a scale of the computer cluster is expanded, to resolve a performance bottleneck problem of the computer cluster.

The foregoing example is still used as an example. It is assumed that one switching chip has a switching capacity of 12.8 Tbps, and may provide 64*200 Gb ports, where 32 of the ports are downlink ports. When one switch is connected to 128 computing chips, an available bandwidth of each computing chip is only 50 Gb. In the first cabinet 400 provided in this application, each first switching chip 120 is connected to 32 computing chips 130, and each second switching chip 220 is connected to 32 first switching chips 120. The first cabinet 400 may provide 1024*200 Gb ports. The cluster scale is expanded from 128 computing chips 130 to 1024 computing chips, and the port bandwidth is increased from 50 Gb to 200 Gb. This not only expands the scale of the computing cluster, but also increases the bandwidth of each computing chip, to resolve a problem that performance of the computing chip is limited by the bandwidth, and improve the performance of the entire computer cluster.

The link 300 refers to a physical line between the first case 100 in which the fusion node 110 is located and the second case 200 in which the switching node 210 is located. The link 300 may include an electrical connection manner and an optical connection manner. The two connection manners are separately described below.

First, regardless of the electrical connection manner or the optical connection manner, a connection manner between the switching node 210 and the fusion node 110 is orthogonal connection. The orthogonal connection refers to a signal connection between two cases that are perpendicular to each other. For example, the first case 100 in which the fusion node 110 is located is horizontally placed, the second case 200 in which the switching node 210 is located is vertically placed, and communication connection is established between the first case 100 and the second case 200. Alternatively, the second case 200 is horizontally placed, and the first case 100 is vertically placed. This is not specifically limited in this application. It should be understood that the switching node 210 is orthogonally connected to the fusion node 110, so that a length of the link 300 between the switching node 210 and the fusion node 110 can be reduced, to reduce a cable connection error rate caused by excessive cables or optical fibers, and also reduce losses of the cables or optical fibers.

Second, in the electrical connection, an electrical connector is mainly used to implement communication connection between the fusion node 110 and the switching node 210. The electrical connector herein is a backplane-free orthogonal connector. The backplane-free orthogonal connector may enable the switching node 210 to be directly orthogonally connected to the fusion node 110. The fusion node 110 and the switching node 210 are directly connected and coupled instead of being connected through a cable or an optical fiber, to avoid a high cable connection error rate and high losses of cables or optical fibers that are caused by excessive cables or optical fibers.

Optionally, in the electrical connection, the electrical connector and a cable (cable) may alternatively be combined to implement the communication connection between the fusion node 110 and the switching node 210. The electrical connector herein is a high-speed connector having a backplane. In this connection manner, a small quantity of cables need to be used. First, flexible connections between the switching node 210, the fusion node 110, and the high-speed connector are implemented through the cables, and the high-speed connector is twisted by 90 degrees to implement the orthogonal connection between the switching node 210 and the fusion node 110, so that the switching node 210 is approximately directly orthogonal to the fusion node 110. Because the quantity of cables is reduced, the high cable connection error rate and the high losses of cables or optical fibers that are caused by the excessive cables or optical fibers can be mitigated.

Finally, in the optical connection, an optical connector is mainly used to implement the communication connection between the fusion node 110 and the switching node 210. The optical connector herein may be an optical blind-mate connector, and the optical blind-mate connector implements the orthogonal connection between the fusion node 110 and the switching node 210 by using an optical signal. The optical signal may further increase a bandwidth for communication between the switching node 210 and the fusion node 110 by using a technology such as dense wavelength division multiplexing (dense wavelength division multiplexing, DWDM) or a high-density optical fiber connector, to further increase an available bandwidth of each computing chip, so that the computer cluster can be expanded to a larger scale, and the performance of the computer cluster can be improved. However, costs of the optical blind-mate connector are higher than those of the backplane-free orthogonal connector. Therefore, a link and a specific implementation of the link 300 may be specifically selected based on the actual application scenario.

During specific implementation, the switching node 210 may establish communication connection to each fusion node 110 through the link 300, so that data communication between the fusion nodes can be implemented through any switching node 210. In this way, communication connection can be implemented between all computing chips in the first cabinet 400.

In an embodiment, quantities of switching nodes 210 and fusion nodes 110 in a first cabinet 400 may be determined based on at least one of a bandwidth requirement of a computing chip 130, a quantity of ports and a switching capacity of a first switching chip 120, and a quantity of ports and a switching capacity of a first switching node 210. Then, a quantity of second switching chips 220 in each switching node 210 and quantities of computing chips 130 and first switching chips 120 in each fusion node 110 are determined in combination with various environmental conditions in an actual application scenario, for example, sizes of a first case and a second case, a quantity of cases that can be mounted in the cabinet, and a parallel processing capability that is needed by a user and that is of the cabinet.

For example, it is assumed that 256 computing chips can be mounted in one cabinet, and a requirement of the user is that the bandwidth of the computing chip 130 is at least 200 Gb. A selected first switching chip 120 and a selected second switching chip 220 each have a switching capacity of 12.8 Tbps, and may provide 64*200 Gb ports, where 32 of the ports are downlink ports. When a computer scale is 256 computing chips, the entire first cabinet 400 needs 9600*200 Gb ports. In this case, each first switching chip 120 may be connected to a maximum of 32 computing chips 130, and each second switching chip 220 is connected to at least eight first switching chips 120, to implement a computer cluster having 256 computing chips, where an available bandwidth of each computing chip is 200 Gb. Then, with reference to the actual application scenario, a quantity of second switching chips in each switching node and quantities of first switching chips and computing chips in each fusion node are determined. For example, one fusion node includes two first switching chips and 32 computing chips, and each first switching chip is connected to the 32 computing chips. There are eight fusion nodes and 16 first switching chips in total. Each switching node includes four second switching chips. There are four switching nodes and 16 second switching chips in total. Such a network scale can ensure the available bandwidth of each computing chip and the computer cluster scale of the entire cabinet. In addition, there are a plurality of parallel paths between the computing chips. Therefore, fault tolerance performance of a network is good, and traffic can be properly distributed in pods to avoid overload.

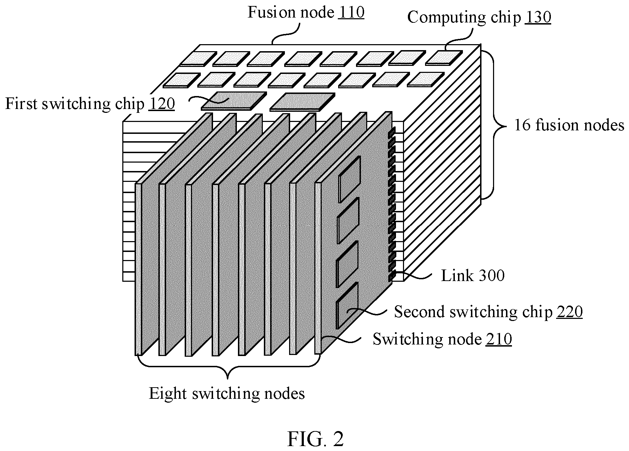

FIG. 2 is a schematic diagram of a structure of a computing system in an application scenario according to this application. As shown in FIG. 2, the computing system may be the first cabinet 400 in the embodiment in FIG. 1. The cabinet may include 16 fusion nodes 110 and eight switching nodes 210. The 16 fusion nodes 110 and the eight switching nodes 210 may establish communication connection through links 300. The link 300 herein may be the foregoing backplane-free orthogonal connector. Each fusion node 110 includes 16 computing chips 130 and two first switching chips 120, and each switching node 210 includes four second switching chips 220.

It should be noted that the quantities of fusion nodes 110 and switching nodes 210 in the first cabinet 400 in FIG. 2 are used as an example for description, the quantities of computing chips 130 and first switching chips 120 in the fusion node 110 are used as an example for description, and the quantity of second switching chips 220 in the switching node 210 are used as an example for description. This is not specifically limited in this application. The quantities of fusion nodes 110 and switching nodes 210 may be determined based on at least one of a bandwidth requirement of the computing chip 130, a quantity of ports and a switching capacity of the first switching chip 120, and a quantity of ports and a switching capacity of the first switching node 210, or may be determined with reference to a network topology structure including the fusion nodes 110 and the switching nodes 210.

For example, it is assumed that the network topology structure including the fusion nodes 110 and the switching nodes 210 in the first cabinet is a fat-tree network. The fat-tree network is a large-scale non-blocking network constructed by using a large quantity of low-performance switches and a multi-layer network. The fat-tree network may usually include a plurality of pods (pods) and a plurality of core switches connected to the pods. Each pod includes a plurality of layer 1 switches and a plurality of layer 2 switches. Each layer 1 switch is connected to one or more computing chips, and the layer 1 switch is configured to implement data communication between the computing chips. Each layer 2 switch is connected to one or more layer 1 switches, and the layer 2 switch is configured to implement data communication between the layer 1 switches. Each core switch is connected to one or more pods, and the core switch is configured to implement data communication between the pods. It is assumed that a quantity of pods in the first cabinet is K. In this case, a quantity of layer 1 switches is K/2, a quantity of layer 2 switches is (K/2)², and a quantity of computing chips connected to each layer 1 switch is (K/2)². The quantities of fusion nodes 110 and switching nodes 210 may be determined with reference to the bandwidth of the computing chip 130, the quantity of ports and the switching capacity of the first switching chip 120, and the quantity of ports and the switching capacity of the first switching node 210 that are needed by a user. It should be understood that, in the foregoing example, the fat-tree network is used as an example for description. In another network structure, the quantities of fusion nodes 110 and switching nodes 210 may be determined based on a rule of the another network structure. This is not specifically limited in this application.

With reference to the descriptions in the embodiment in FIG. 1, it can be learned that the 16 computing chips 130 and the two first switching chips 120 in each fusion node 110 are deployed in a same first case 100, and the four second switching chips 220 of each switching node are deployed in a same second case 200. Data communication is implemented between the first case 100 and the second case 200 in an orthogonal connection manner.

It should be understood that the switching node 210 is connected to the fusion node 110 through the backplane-free orthogonal connector, and no cable or optical fiber is used, to reduce a quantity and a length of cables. In this way, signal losses can be reduced, and a high connection error rate caused by excessive cables or optical-to-electrical conversion delay overheads caused by excessive optical fibers can also be avoided.

During specific implementation, after the computing chip, the first switching chip, and the second switching chip establish communication connection, the first switching chip and the second switching chip each may generate a routing table or a MAC address table by using a forwarding algorithm based on a connection relationship. The routing table or the MAC address table may include a plurality of entries, each entry may represent a forwarding path, and each entry may include at least a source address, a destination address, and a corresponding next-hop address. After receiving a data packet sent by the computing chip, the first switching chip may query the routing table or the MAC address table based on a source address and a destination address that are carried in the data packet to obtain a forwarding path of the data packet, determine a next-hop address, and forward the data packet to the next-hop address.

If the first switching chip or the second switching chip is a switching chip of a layer 2 switch (a link layer switch), the MAC address table may be generated by using a switch forwarding algorithm such as an ARP. The source address and the destination address may be MAC addresses. If the first switching chip or the second switching chip is a switching chip of a layer 3 switch (a network layer switch), the routing table may be generated by using a routing algorithm such as a RIP and a BGP. The source address and the destination address may be IP addresses. This is not specifically limited in this application.

A forwarding path recorded in the routing table or the MAC address table is determined based on a connection relationship between the first switching chip 120 and the computing chip 130. The following describes a possible connection relationship between the first switching chip 120 and the computing chip 130 and a corresponding forwarding path in this application.

Optionally, in each fusion node 110, each first switching chip 120 may establish communication connection to all computing chips 130, and communication between the computing chips 130 in each fusion node 110 may be implemented through any first switching chip 120 in the same fusion node 110. A forwarding path of a data packet between the computing chips 130 in each fusion node 110 may include any first switching chip 120. Each switching node 210 establishes communication connection to all the fusion nodes 110 through the links 300, so that data communication may be implemented between the fusion nodes 110 through any second switching chip 220, and a forwarding path of the data packet between the fusion nodes 110 may include any second switching chip 220.

Optionally, each first switching chip 120 may establish communication connection to a part of the computing chips 130, and a forwarding path may be determined for data communication between the plurality of computing chips in the fusion node based on a first switching chip connected to the computing chips. If a transmitter and a receiver are connected to a same first switching chip, the first switching chip 120 may implement data communication between the first switching chip 120 and the part of the computing chips 130 based on the routing table. The forwarding path of the data packet may include the source address, an address of the same first switching chip, and the destination address.

If the transmitter and the receiver are connected to different first switching chips, and there is no direct connection between the two first switching chips, data communication between the transmitter and the receiver may be implemented through a second switching chip connected to the first switching chips connected to the transmitter and the receiver. The forwarding path of the packet may include the source address, an address of a first switching chip 1, an address of a second switching chip 1, an address of a first switching chip 2, and the destination address. The first switching chip 1 is connected to a computing chip located at the source address, the first switching chip 2 is connected to a computing chip located at the destination address, and the second switching chip 1 is connected to the first switching chip 1 and the first switching chip 2.

If the transmitter and the receiver are connected to different first switching chips, and there is a direct connection between the two first switching chips, the data communication may be implemented through the two first switching chips connected to transmitter and the receiver. The forwarding path of the packet may include the source address, the first switching chip 1, the first switching chip 2, and the destination address.

During specific implementation, each computing chip may be connected to one first switching chip, and a data packet generated by the computing chip may be directly sent to the first switching chip connected to the computing chip. In some embodiments, each computing chip may alternatively be connected to at least one first switching chip. In this case, after generating a data packet, the computing chip may send, based on a network status fed back by the at least one first switching chip connected to the computing chip, the data packet to a first switching chip with a better network status, to forward the packet. Alternatively, the first cabinet 400 may include a management node. The management node may determine, based on load balancing or another network management algorithm, a first switching chip that forwards the data packet. This is not specifically limited in this application. Alternatively, the computing chip may select, based on an identifier carried in the data packet, a first switching chip that is in first switching chips connected to the computing chip and that can process the data packet carrying the identifier, to forward the data packet. For example, the identifier may be an identifier of a first forwarding plane. In this case, only a first switching chip on the first forwarding plane can forward the data packet. This is not specifically limited in this application.

It should be noted that in the example shown in FIG. 2, although connection relationships between chips in the switching node 210 and the fusion node 110 and between the chips and a connector are not drawn, the connection relationships between the chips in the switching node 210 and the fusion node 110 are encapsulated in a case based on the connection relationships between the chips in nodes in the foregoing content. During specific implementation, communication connection may be established between the computing chip and the first switching chip in the fusion node 110 and between the first switching chip and the connector through buses. Communication connection may also be established between the second switching chip in the switching node 210 and the connector through a bus. The bus may be a PCIe bus, an EISA bus, a UB bus, a CXL bus, a CCIX bus, or the like. This is not specifically limited in this application.

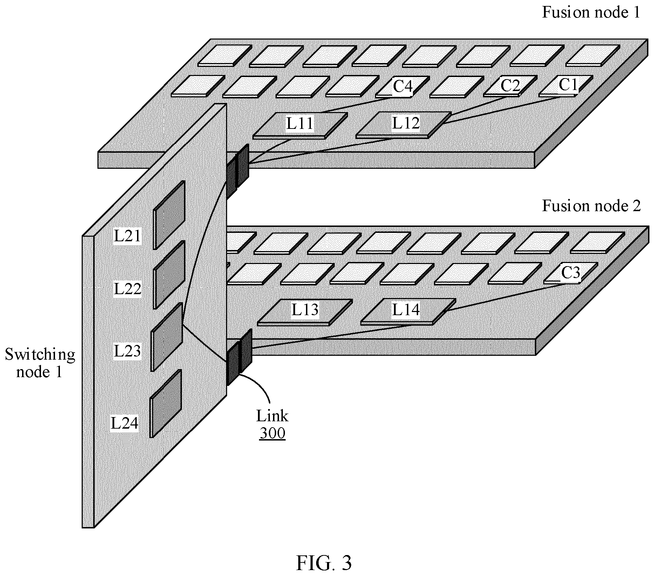

In this embodiment of this application, the first switching chip 120 is responsible for data communication between the computing chips 130 in the same fusion node 110, and the second switching chip 220 in the switching node 210 is responsible for data communication between computing chips 130 in different fusion nodes 110. With reference to FIG. 3, the following describes, by using an example, a specific procedure in which the first switching chip 120 implements the data communication between the computing chips 130 in the same node and between the computing chips 130 in the different nodes.

In a possible implementation, FIG. 3 is a schematic diagram of connection relationships between fusion nodes and a switching node according to this application. A fusion node 1 and a fusion node 16 in FIG. 3 are two of the 16 fusion nodes in FIG. 2, and a switching node 1 in FIG. 3 is one of the eight switching nodes in FIG. 2.

As shown in FIG. 3, a computing chip C1 and a computing chip C2 in the fusion node 1 are connected to a first switching chip L12, the first switching chip L12 is connected to a link 300, a second switching chip L23 in the switching node 1 is connected to links 300, a first switching chip L14 of the fusion node 16 is connected to the link 300, and the first switching chip L14 is connected to a computing chip C3. Based on connection relationships between chips, a routing table or a MAC address table in each first switching chip may record a plurality of forwarding paths. A rule of the forwarding path may be as follows.

When the computing chip C1 and the computing chip C2 in the fusion node 1 perform data communication, the data communication may be performed through the first switching chip L12 in the fusion node 1. A forwarding path of a data packet sent by the computing chip C1 to the computing chip C2 is: The computing chip C1 sends the data packet to the first switching chip L12, and the first switching chip L12 forwards the data packet to the computing chip C2, to implement the data communication between the computing chips in the same fusion node.

When the computing chip C1 and a computing chip C4 in the fusion node 1 perform data communication, the two computing chips are connected to different first switching chips. A forwarding path of a data packet sent by the computing chip C1 to the computing chip C4 is: The computing chip C1 may first send the data packet to the first switching chip L12, the first switching chip L12 sends the data packet to the second switching chip L23 in the switching node 1, the second switching chip L23 forwards the data packet to a first switching chip L11 in the fusion node 1, and the first switching chip L11 forwards the data packet to the computing chip C4.

Optionally, if communication connection is established between the first switching chip L11 and the first switching chip L12, the forwarding path of the data packet sent by the computing chip C1 to the computing chip C2 is as follows: The computing chip C1 may first send the data packet to the first switching chip L12, the first switching chip L12 forwards the data packet to the first switching chip L11, and the first switching chip L11 forwards the data packet to the computing chip C4.

It should be noted that if a plurality of first switching chips are connected to a computing chip serving as a transmit end, or a plurality of first switching chips are connected to a computing chip serving as a receive end, a plurality of paths with different overheads may exist between the computing chip serving as the transmit end and the computing chip serving as the receive end. A routing table or a MAC address table on the local computing chip of the transmit end may determine an optimal forwarding path by using an algorithm such as load balancing. The computing chip serving as the transmit end can query the local routing table to obtain the optimal forwarding path, to avoid network congestion.

When the computing chip C1 of the fusion node 1 and the computing chip C3 of the fusion node 16 perform data communication, the data communication may be implemented through the first switching chip L12 in the fusion node 1, the second switching chip L23 in the switching node 1, and the first switching chip L14 in the fusion node 16. During specific implementation, the computing chip C1 may first send a data packet to the first switching chip L12, the first switching chip L12 may forward the data packet to the second switching chip L23 in the switching node 1, the second switching chip L23 may forward the data packet to the first switching chip L14 in the fusion node 16, and the first switching chip L14 may forward the data packet to the computing chip C3 in the same node.

During specific implementation, data communication between fusion nodes may be implemented through any second switching chip in any switching node, for example, implemented through any second switching chip in a switching node 8. Specifically, an appropriate second switching chip may be determined with reference to a workload status of a second switching chip in each switching node. Alternatively, a user may set that a part of the switching nodes are responsible for data communication between a part of the fusion nodes. This is not specifically limited in this application.

It should be understood that, for ease of description, FIG. 3 does not show all connection relationships between computing chips and first switching chips in the fusion nodes, does not show connection relationships between all the first switching chips and the links 300, and does not show connection relationships between all second switching chips and the links 300 either. During actual application, all the computing chips in the fusion node 1 may be connected to a part or all of the first switching chips in the fusion node 1, all the first switching chips in the fusion node 1 may be connected to the link 300, and all the second switching chips in the switching node 1 may be connected to the links 300. Similarly, all the first switching chips of the fusion node 16 may be connected to a connector.

With reference to the descriptions of the embodiment in FIG. 3, a procedure of data communication between computing chips in any one of the fusion nodes 1 to 16 in FIG. 2 and between computing chips in nodes may be learned. Details are not described herein one by one.

In an embodiment, a first cabinet 400 includes a plurality of fusion nodes 110 and a plurality of switching nodes 210. These fusion nodes 110 and switching nodes 210 may form an interconnection network. A network topology structure of the interconnection network may include a network topology structure having no central switching node and a network topology structure having a central switching node. The network topology structure having no central switching node and the network topology structure having the central switching node are separately described below.

Specifically, in the network topology structure having no central switching node, the interconnection network does not include another switch cabinet, but includes only the foregoing computing system (for example, the first cabinet 400). Data communication is implemented between a plurality of computing systems through the switching nodes 210. In the network topology structure having the central node, the interconnection network further includes another switch cabinet. The switch cabinet is configured to implement the data communication between the plurality of computing systems. The switch cabinet herein is the central switching node.

During specific implementation, the network topology structure having no central switching node may include but is not limited to a dragonfly (dragonfly or dragonfly+) network, a ring (torus) network, and the like. The network topology structure having the central switching node may include, but is not limited to, a fat-tree (fat-tree) network. This is not specifically limited in this application.

The dragonfly includes a plurality of groups. Each group is actually a sub-network that implements intra-group communication. Each group herein may be the foregoing first cabinet 400. The groups are connected through a link, and the link between the groups is narrow and similar to the broad body and narrow wings of a dragonfly. Therefore, a dragonfly network is used. In other words, the foregoing first cabinets 400 are connected through a link, and data communication between the first cabinets 400 is implemented through switching nodes in the first cabinets 400. It should be understood that because narrow links are used between the groups included in the dragonfly network, a quantity of global links can be greatly reduced, and networking costs can be reduced.

Further, the groups of the dragonfly network may be connected in an all-to-all (all-to-all) manner. Such a network is also referred to as a dragonfly+ network. "All-to-all" means that there is at least one direct link between each group and each group in other groups of the dragonfly network. The dragonfly+ network group has a larger scale and supports more connected groups. A connection manner with minimum hops is adopted in the group, and an all-to-all structure or a flat butterfly structure is usually used. In this way, a length of the links can be further shortened, to provide low-latency communication.

The Torus network includes a plurality of nodes, each node may be the foregoing first cabinet 400, and wraparound links (wraparound links or toroidal boundaries) exist between the nodes. Due to the existence of the wraparound links, in the torus network, a node at a center of a topology is no longer different from a node at an edge of the topology. Each node has two neighboring nodes in each dimension. Therefore, a plurality of forwarding paths may exist between any two nodes, and reliability, a switching capacity, and scalability of the network are all high.

During specific implementation, in the foregoing network topology structure having no central switching node, that is, in the dragonfly network, the dragonfly+ network, and the torus network, a data packet needs to be forwarded between the first cabinets 400 through the switching nodes 210 in each first cabinet 400. A forwarding path of the data packet may pass through one or more switching nodes 210. This is not specifically limited in this application.

The fat-tree network is a large-scale non-blocking network constructed by using a large quantity of low-performance switches and a multi-layer network. The fat-tree network may usually include a plurality of pods (pods) and a plurality of core switches connected to the pods. Each pod includes a plurality of layer 1 switches and a plurality of layer 2 switches. Each layer 1 switch is connected to one or more computing chips, and the layer 1 switch is configured to implement data communication between the computing chips. Each layer 2 switch is connected to one or more layer 1 switches, and the layer 2 switch is configured to implement data communication between the layer 1 switches. Each core switch is connected to one or more pods, and the core switch is configured to implement data communication between the pods. Certainly, the core switches may also form a multi-layer sub-network, and data communication between sub-networks is implemented by an upper-layer sub-network, and so on. In this way, a plurality of parallel paths may exist between every two compute nodes in the fat-tree network. Therefore, fault tolerance performance of the network is good. In addition, traffic can be properly distributed in the pods to avoid overload. It should be understood that the fat-tree network is a non-blocking network technology, and a large quantity of switching chips are used to construct a large-scale non-blocking network. Theoretically, a bandwidth of the network does not converge from bottom to top, there are a plurality of data communication paths, and there is always a path that can enable a communication bandwidth to reach a bandwidth requirement. A problem that performance of a computing chip is limited by a network bandwidth is further resolved, and performance of a computer cluster is improved.

During specific implementation, in the foregoing network topology structure having the central switching node, that is, in the fat-tree network, each first cabinet 400 may establish communication connection to one or more central switching nodes, and the data packet needs to be forwarded between the first cabinets 400 through the one or more central switching nodes.

It should be understood that the network topology structure including the plurality of fusion nodes 110 and the plurality of switching nodes 210 may further include other large-scale network topology structures that are commonly used and that are sensitive to a bandwidth and latency. Examples are not described one by one herein. This is not specifically limited in this application.

The computing system provided in this application is further described below by using an example in which a network topology structure including a plurality of computing systems (namely, the foregoing first cabinets 400) is a fat-tree network topology structure having a central switching node.

An interconnection network including the plurality of first cabinets 400 may further include a plurality of second cabinets. These cabinets may be switch cabinets, and each second cabinet may include a plurality of third switching chips. Each second cabinet is configured to implement communication connection between the plurality of first cabinets. For example, the network structure is a fat-tree network. First switching chips and computing chips in the first cabinet 400 may form a first-layer network in the fat-tree network, second switching chips and the first switching chips may form a second-layer network in the fat-tree network, and the third switching chips and the second switching chips may form a third-layer network in the fat-tree network. The third switching chips may alternatively form a multi-layer network: form a third-layer network, a fourth-layer network, and the like in the fat-tree network. A quantity of layers of the network including the third switching chips is not limited in this application.

During specific implementation, communication connection may be established between the second cabinet and the first cabinet 400 through a cable or an optical fiber. This is not specifically limited in this application.

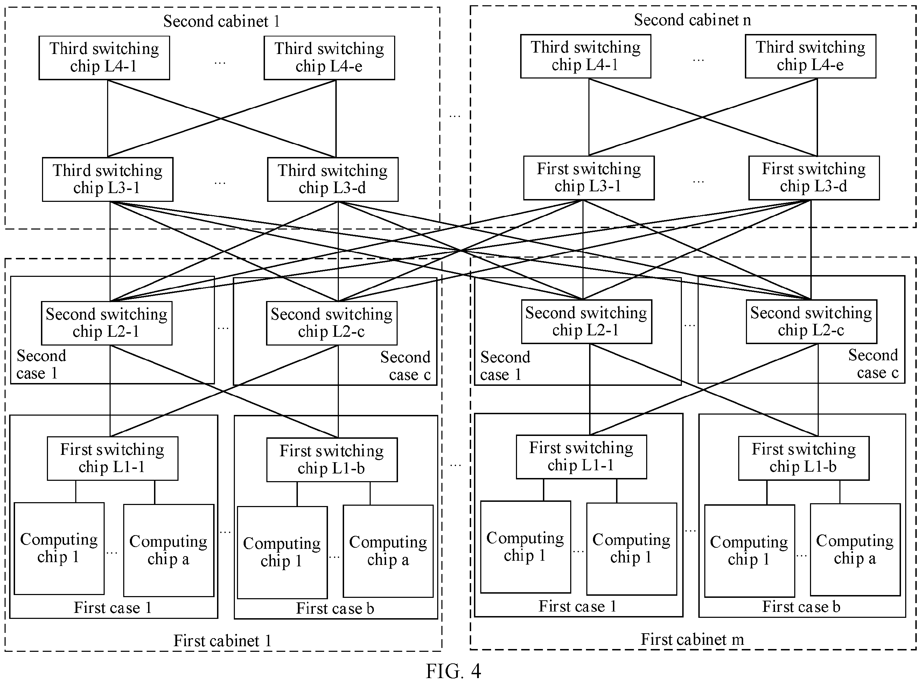

For example, FIG. 4 is a schematic diagram of a structure of a four-layer fat-tree network according to this application. As shown in FIG. 4, a first-layer network in the four-layer fat-tree network is implemented by a plurality of first switching chips L1, a second layer network is implemented by a plurality of second switching chips L2, a third layer network is implemented by a plurality of third switching chips L3, and a fourth layer network is implemented by a plurality of third switching chips L4. The first switching chips L1, the second switching chips L2, the third switching chips L3, and the third switching chips L4 may be same switching chips or different switching chips. This is not specifically limited in this application.

The first switching chips L1 and computing chips may be deployed in a first case, the second switching chips L2 may be deployed in a second case, and the first case and the second case may be deployed in a first cabinet. The third switching chips L3 and the third switching chips L4 may be deployed in a second cabinet. It should be understood that the third switching chips L3 and the third switching chips L4 may alternatively be deployed in different cabinets. This is not specifically limited in this application.

During specific implementation, each computing chip may establish communication connection to each first switching chip L1 in a same case, each first switching chip L1 may establish communication connection to each second switching chip L2 in a same cabinet, each second switching chip L2 may establish communication connection to each third switching chip L3, and each third switching chip L3 may establish communication connection to each fourth switching chip L4.

It should be understood that the fat-tree network constructs a large-scale non-blocking network by using a large quantity of switching chips. Although the fat-tree network has an advantage that a bandwidth does not theoretically converge from bottom to top, due to a quantity of the switching chips and a complex connection relationship, there are excessive cables or optical fibers in the network, and problems such as difficult cable connection, incorrect connection, and high optical-to-electrical conversion losses are likely to occur. However, in the four-layer fat-tree network shown in FIG. 4, the first-layer network and the second-layer network are encapsulated in a same cabinet. In addition, the computing chips and the first switching chips L1 are in the first case, one or more second switching chips L2 are in the second case, and the first case establishes communication connection to the second case through a backplane-free orthogonal connector, so that a quantity of cables or optical fibers in the first cabinet in which the first case and the second case are placed is greatly reduced. The first cabinets are used to form the four-layer fat-tree network shown in FIG. 4, so that a quantity of cables or optical fibers in the four-layer fat-tree network is greatly reduced, to resolve the problems such as the difficult cable connection, the incorrect connection, and the high optical-to-electrical conversion losses that easily occur in the fat-tree network due to the excessive cables or optical fibers.

It should be noted that, in the example shown in FIG. 4, the first case in which each fusion node is located includes a computing chips and one first switching chip L1, and each second case includes one second switching chip L2. Each first cabinet contains b first cases and c second cases. Each second cabinet includes d third switching chips L3 and e third switching chips L4, and a computer cluster includes m first cabinets and n first cabinets. It should be understood that FIG. 4 is used as an example for description. Quantities of computing chips and first switching chips L1 in the first case, a quantity of second switching chips L2 in the second case, quantities of first cases and second cases in the first cabinet, quantities of third switching chips L3 and fourth switching chips L4 in the second case, and quantities of first cabinets and second cabinets are not limited in this application. Specifically, a quantity of layers of the fat-tree network and a quantity of switching chips at each layer of the network may be determined based on a bandwidth requirement of each computing chip, a quantity of ports that can be provided by each switching chip, and a switching capacity. This is not specifically limited in this application.

It should be noted that in the example shown in FIG. 4, each computing chip is connected to each first switching chip L1, each first switching chip L1 is connected to each second switching chip L2, each second switching chip L2 is connected to each third switching chip L3, and each third switching chip L3 is connected to each third switching chip L4. It should be understood that FIG. 4 is used as an example for description. During specific implementation, each computing chip may alternatively be connected to a part of the first switching chips L1, each second switching chip may alternatively be connected to a part of the third switching chips L3, and each third switching chip L3 may alternatively be connected to a part of the third switching chips L4, to ensure that each computing chip can communicate with another computing chip in the computer cluster.

Optionally, if each first switching chip L1 is connected to each computing chip, data communication may be implemented between computing chips in a same case through first switching chips L1 in a same node.

Optionally, it is assumed that each computing chip in a same case is connected to a part of the first switching chips L1. In this case, when data is exchanged between the computing chips in the same case, if a computing chip serving as a transmitter and a computing chip serving as a receiver are connected to a same first switching chip L1, the data communication may be implemented through the first switching chip L1 to which the transmitter and the receiver are jointly connected. For details, refer to the descriptions of the step procedure in which the computing chip C1 sends the data packet to the computing chip C2 in the embodiment in FIG. 3. If the transmitter and the receiver are not connected to a same first switching chip L1, the data communication may be implemented through first switching chips L1 connected to the transmitter and the receiver and a second switching chip L2 in a same cabinet. For details, refer to the descriptions of the step procedure in which the computing chip C1 sends the data packet to the computing chip C4 in the embodiment in FIG. 3. Details are not described herein again.

For example, if a requirement of a user is that the computer cluster includes 60,000 computing chips, each computing chip needs 4*200 Gb ports, and the computer cluster needs to provide 240,000*200 Gb ports. For example, a switching chip still has a switching capacity of 12.8 Tbps, and provides 64*200 Gb ports, where 32 of the ports are downlink ports. The four-layer fat-tree network shown in FIG. 4 may be obtained based on a user requirement and a specification of each computing chip. In the fat-tree network, the quantity a of computing chips is 8, the quantity b of first cases is 32, the quantity c of second cases is 32, the quantity d of third switching chips is 64, the quantity e of third switching chips L4 is 32, the quantity m of first cabinets is about 200, and the quantity n of second cabinets is about 200, to meet the user requirement, and ensure that each of the 60,000 computing chips can have 4*200 Gb ports. It should be understood that the foregoing example is used for description. This is not specifically limited in this application.

In an embodiment, a plurality of first switching chips in a fusion node include a first switching chip on a first switching plane and a first switching chip on a second switching plane, and a plurality of second switching chips in a switching node include a second switching chip on the first switching plane and a second switching chip on the second switching plane. Simply speaking, a network including first switching chips and second switching chips in a first cabinet may include a plurality of switching planes, a part of the first switching chips and a part of the second switching chips are responsible for data communication on the first switching plane, and the other part of the first switching chips and the other part of the second switching chips are responsible for data communication on the second switching plane. It should be understood that the first switching plane and the second switching plane do not specify that technical solutions of this application support only two switching planes, but intend to express that the technical solutions of this application support different switching planes. Exactly, more than two switching planes may be further supported. A quantity of switching planes may be determined based on an actual application scenario.

Optionally, the first switching plane and the second switching plane may be switching planes with network isolation. Specifically, considering service security, to implement network isolation of a service 1 and a service 2 of a user and avoid a network security problem, the cabinet provided in this application may be used to form a fat-tree network of two or more layers, and a corresponding switching plane is allocated to each switching chip. In this way, the user may implement data communication of the service 1 on the first switching plane, and implement data communication of the service 2 on the second switching plane. No data communication is performed between the two switching planes. To be specific, the first switching chip and the second switching chip on the first switching plane do not process a data packet of the second switching plane, and the first switching chip and the second switching chip on the second switching plane do not process a data packet of the first switching plane, to implement network isolation of the first switching plane and the second switching plane. It should be understood that the foregoing example is used for description. This is not specifically limited in this application.

Optionally, the first switching plane and the second switching plane bear the different services. For example, for a user, a service 1 uses the first switching plane, and a service 2 uses the second switching plane, to avoid a network delay caused by a service conflict. A plurality of switching planes may be used to enable the computer cluster to provide a larger bandwidth capability for the user, to improve user experience.

Optionally, the first switching plane and the second switching plane use different communication protocols. For example, the service 1 needs to use a communication protocol 1, and the service 2 needs to use a communication protocol 2. The cabinet provided in this application is used, and a corresponding switching plane is allocated to each switching chip. The first switching plane uses the communication protocol 1 to process the service 1, and the second switching plane uses the communication protocol 2 to process the service 2. It should be understood that the foregoing example is used for description. This is not specifically limited in this application.

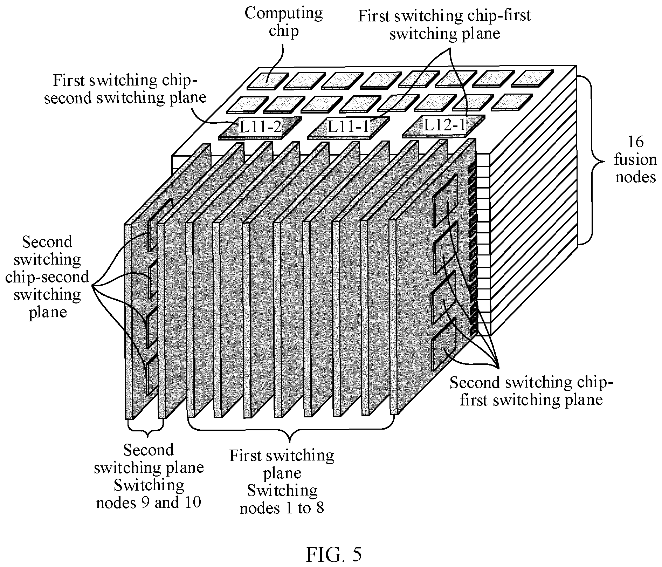

For example, FIG. 5 is a schematic diagram of a structure of a computing system in an application scenario according to this application. The computing system is a cabinet server, for example, a first cabinet 400. In the application scenario shown in FIG. 2, the cabinet includes only one switching plane. In the application scenario shown in FIG. 5, the cabinet includes two switching planes. The cabinet includes 16 fusion nodes and 10 switching nodes. Each fusion node includes eight computing chips and three first switching chips. A first switching chip L11-1 and a first switching chip L12-1 belong to a first switching plane, and a first switching chip L11-2 belongs to a second switching plane. Each switching node includes four second switching chips. Switching nodes 1 to 8 belong to the first switching plane, and a switching node 9 and a switching node 10 belong to the second switching plane.

It should be understood that the structure described in FIG. 2 and FIG. 3 may be understood as a network structure of a single switching plane. In FIG. 5, a second switching plane is added on the basis of the network structure of the first switching plane shown in FIG. 2 and FIG. 3. Specifically, one first switching chip L11-2 is added to each fusion node as the first switching chip on the second switching plane, a switching node 9 and a switching node 10 are added as switching nodes on the second switching plane, and each switching node includes four second switching chips. In this way, in the network structure shown in FIG. 5, the first switching plane includes 32 first switching chips and 32 second switching chips, and the second switching plane includes 16 first switching chips and 8 second switching chips.

During specific implementation, when computing chips perform data communication on the second switching plane, the computing chips in a same fusion node may use a first switching chip on the second switching plane to implement the data communication, and the computing chips in different fusion nodes may use a second switching chip in a switching node on the second switching plane to implement the data communication. Similarly, when the first switching plane is used to perform data communication, the computing chips use a first switching chip and a second switching chip on the first switching plane to implement the data communication. Details are not described herein.

It may be understood that the computing chip may be connected to first switching chips on different switching planes based on service requirements. There is no communication connection between the first switching chips on the different switching planes, and there is no communication connection between second switching chips on the different switching planes either, so that network isolation of the different switching planes can be implemented. The different switching planes can bear the different services and use the different communication protocols, to meet more diversified requirements of a user and improve user experience.

Optionally, based on the user requirement, the first cabinet may further include more switching planes such as a third switching plane and a fourth switching plane, and each switching plane may further include more first switching chips and second switching chips. This is not specifically limited in this application.

During specific implementation, if a quantity of switching nodes is increased, the quantity of switching nodes may be increased in a horizontal direction in a manner similar to that shown in FIG. 5, and a length of a first case in which the fusion nodes are located is adaptively increased, so that an expanded first case can be connected to a larger quantity of switching nodes through a backplane-free orthogonal connector. Similarly, if a quantity of fusion nodes is increased, the quantity of fusion nodes may be increased in a vertical direction, and a length of a second case in which the switching nodes are located is adaptively increased, so that an expanded second case can be connected to a larger quantity of fusion nodes through the backplane-free orthogonal connector.

It should be noted that in the examples in FIG. 3 and FIG. 5, the fusion nodes are placed in the horizontal direction, and the switching nodes are placed in the vertical direction. During specific implementation, the fusion nodes may alternatively be placed in the vertical direction, and the switching nodes may be placed in the horizontal direction. This is not specifically limited in this application.

It should be understood that the first case and the second case may be directly inserted into the backplane-free orthogonal connector for connection without using a cable or an optical fiber. Therefore, a cabinet including a plurality of first cases and a plurality of second cases can greatly reduce a quantity of cables or optical fibers, to avoid a problem of incorrect cable connection, and reduce transmission losses of cables and light.

In an embodiment, a network structure of the first cabinet 400 provided in this application may be a fat-tree network structure of two or more layers, and includes at least one switching plane. During specific implementation, a computing chip may be simultaneously connected to first switching chips on a plurality of switching planes. A first switching chip on a first switching plane establishes communication connection to a second switching chip on the first switching plane, and a first switching chip on a second switching plane establishes communication connection to a second switching chip on the second switching plane. There is no connection between first switching chips on different switching planes, and there is no connection between second switching chips on the different switching planes either, so that the plurality of switching planes exist in the cabinet. Similarly, if the network in the cabinet is a fat-tree network of more than two layers, the second switching chip on the first switching plane is connected to a third switching chip on the first switching plane, and there is no connection between the second switching chip and the third switching chip that are on different switching planes, and so on, to ensure that the first cabinet 400 may include more switching planes and a fat-tree network of more layers.

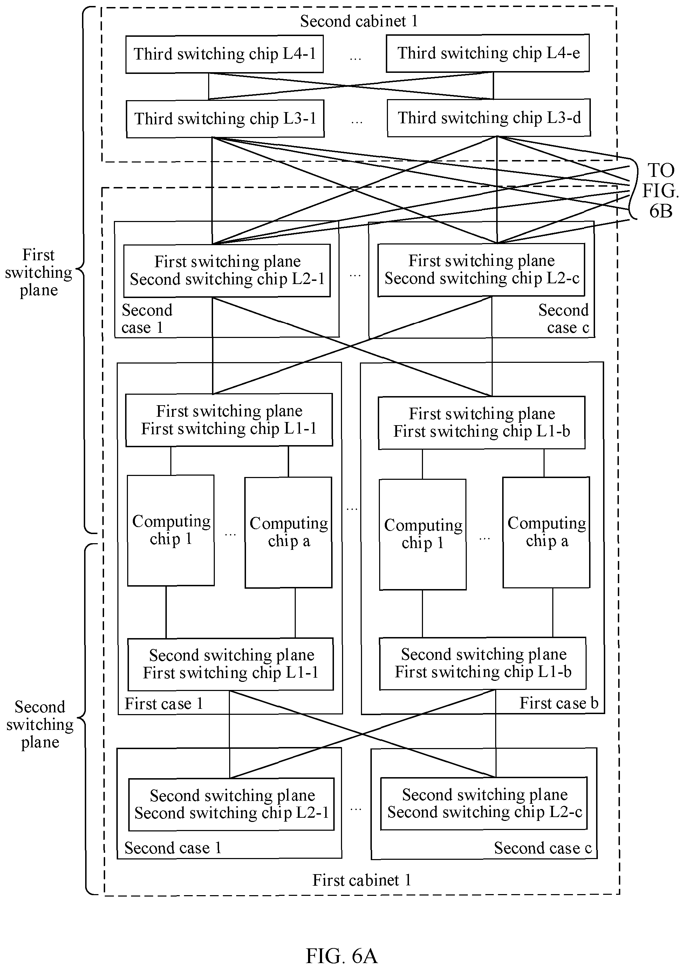

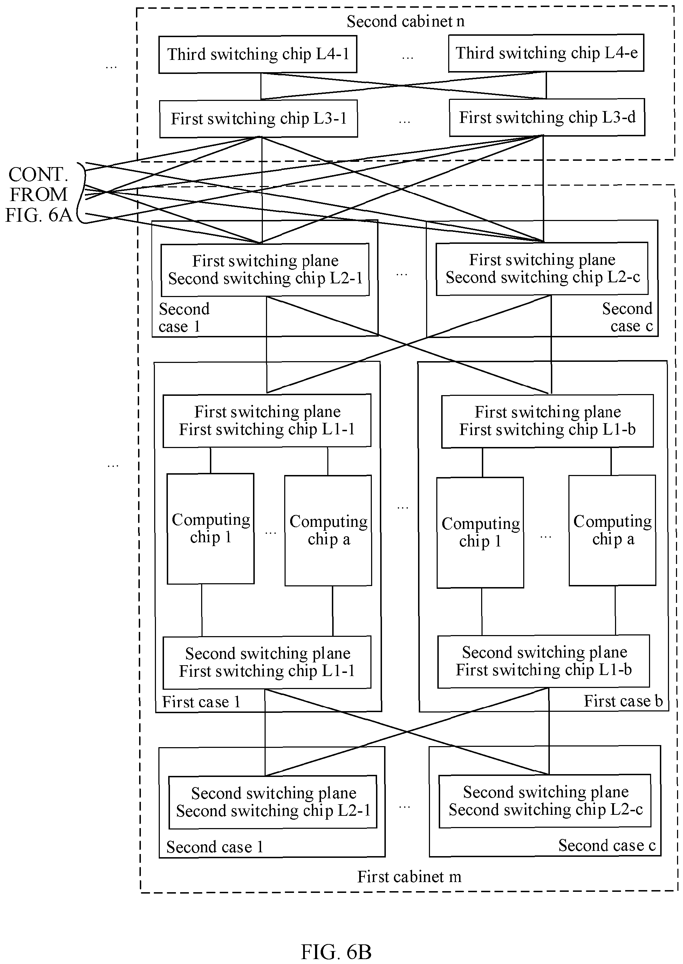

For example, FIG. 6A and FIG. 6B are a schematic diagram of a structure of a computing system in an application scenario according to this application. The computing system may be the first cabinet in the foregoing content, and the computing system includes a first switching plane and a second switching plane. The first switching plane is a four-layer fat-tree network, namely, the four-layer fat-tree network shown in FIG. 4. Details are not described herein. The second switching plane is a two-layer fat-tree network. Each first cabinet includes b first switching chips L1 on the second switching plane and c second switching chips L2 on the second switching plane. In the first cabinet, each first case includes one first switching chip L1 on the second switching plane, and each second case includes one second switching chip L2 on the second switching plane.

It should be noted that in FIG. 1, the second switching chip on the first switching plane and the second switching chip on the second switching plane are encapsulated in different second cases. In some embodiments, the second case may alternatively include second switching chips on a plurality of switching planes. For example, second switching chips L1 and L2 in a switching node 1 are switching chips on the first switching plane, and second switching chips L3 and L4 are switching chips on the second switching plane. During specific implementation, if a requirement of a user is that the switching planes need network isolation, different switching planes may be encapsulated in different second cases. If the requirement of the user is that the different switching planes bear different services or run different communication protocols instead of performing the network isolation, the different switching planes can be encapsulated in a same second case, to save more hardware resources.

In the cabinet shown in FIG. 6A and FIG. 6B, for data communication between computing chips in a same case, if a computing chip 1 needs to send a data packet to a computing chip a in a first case 1 on the first switching plane, the computing chip 1 may send the data packet to a first switching chip L1-1 on the first switching plane in the same case, so that the first switching chip L1-1 forwards the data packet to the computing chip a, to implement the data communication between the computing chips in the same case on the first switching plane. If the computing chip 1 needs to send the data packet to the computing chip a in the first case 1 on the second switching plane, the computing chip 1 may send the data packet to a first switching chip L1-1 on the second switching plane in the same case, so that the first switching chip L1-1 forwards the data packet to the computing chip a, to implement the data communication between the computing chips in the same case on the second switching plane.

Similarly, for data communication between computing chips in different cases, when implemented on the first switching plane, the data communication is implemented through first switching chips on the first switching plane and second switching chips on the first switching plane; and when implemented on the second switching plane, the data communication is implemented through first switching chips on the second switching plane and second switching chips on the second switching plane. Details are not described herein.

Further, for a network of more than two layers, third switching chips may further be divided into a third switching chip on the first switching plane and a third switching chip on the second switching plane. When the user needs to implement the data communication on the first switching plane, the data communication is implemented through first switching chips, second switching chips, and third switching chips that are on the first switching plane. Details are not described herein again.

It should be noted that the computing system provided in this application may alternatively be a chassis server, for example, the foregoing blade server, rack server, or high-density server. The chassis server is similar to the structure of the first cabinet shown in FIG. 1. The chassis server includes a chassis. A plurality of fusion nodes 110 and a plurality of switching nodes 210 exist in the chassis, and other components needed by the chassis server, for example, a power supply, a fan, and a management node, may be further deployed. Examples are not described one by one herein. Similarly, the foregoing second cabinet may alternatively be a chassis device. The chassis device includes a plurality of third switching chips. For details, refer to the descriptions of the first cabinet 400 and the second cabinet. Details are not described herein again.

In a possible implementation, the computing system (for example, the foregoing first cabinet 400) may include one or more symmetric multi-processing (symmetrical multi-processing, SMP) systems, and each fusion node may also include one or more SMP systems. The SMP system refers to a group of processor sets aggregated on a server, and the processor set includes a plurality of CPUs. In addition, processors share a memory and other resources on a server. For example, a bus structure is shared, so that workloads can be evenly allocated to all available processors. To be specific, one SMP system corresponds to one OS domain and a plurality of computing chips. These computing chips may be computing chips in a same fusion node, or may be computing chips in different fusion nodes. This is not specifically limited in this application.

For example, one computing system includes 16 fusion nodes. In this case, the 16 fusion nodes may include 16 SMP systems, where one fusion node corresponds to one SMP system. Alternatively, the 16 fusion nodes include eight SMP systems, where two fusion nodes correspond to one SMP system. Alternatively, the 16 fusion nodes are a fusion node 1 to a fusion node 16, where the fusion node 1 includes two SMP systems, the fusion node 2 and the fusion node 3 correspond to one SMP system, and the fusion nodes 4 to 16 correspond to one SMP system. The foregoing example is used for description. This is not specifically limited in this application.

It should be understood that, the computing chips are connected to each other through the first switching node and the second switching node. Therefore, computing chips in each SMP system may be flexibly combined based on a service requirement of an actual application scenario. This is not specifically limited in this application.

In conclusion, this application provides a computing system. The computing system includes a plurality of fusion nodes and a plurality of switching nodes. A first fusion node in the plurality of fusion nodes includes a plurality of computing chips and at least one first switching chip. The at least one first switching chip is configured to implement communication connection between the plurality of computing chips. A first switching node is configured to implement communication connection between the first fusion node and another fusion node in the plurality of fusion nodes. The first switching node in the plurality of switching nodes is coupled to the first fusion node through a connector, and the plurality of computing chips in the first fusion node are connected to the first switching chip. In this case, even when a quantity of computing chips connected to the first switching chip is reduced, a quantity of computing chips in the entire cabinet may be increased by increasing a quantity of first switching chips. After the quantity of computing chips connected to each first switching chip is reduced, a bandwidth that can be allocated to each computing chip may be increased. In this way, an available bandwidth of each computing chip is increased while a scale of a computer cluster is expanded, to resolve a performance bottleneck problem of the computer cluster.

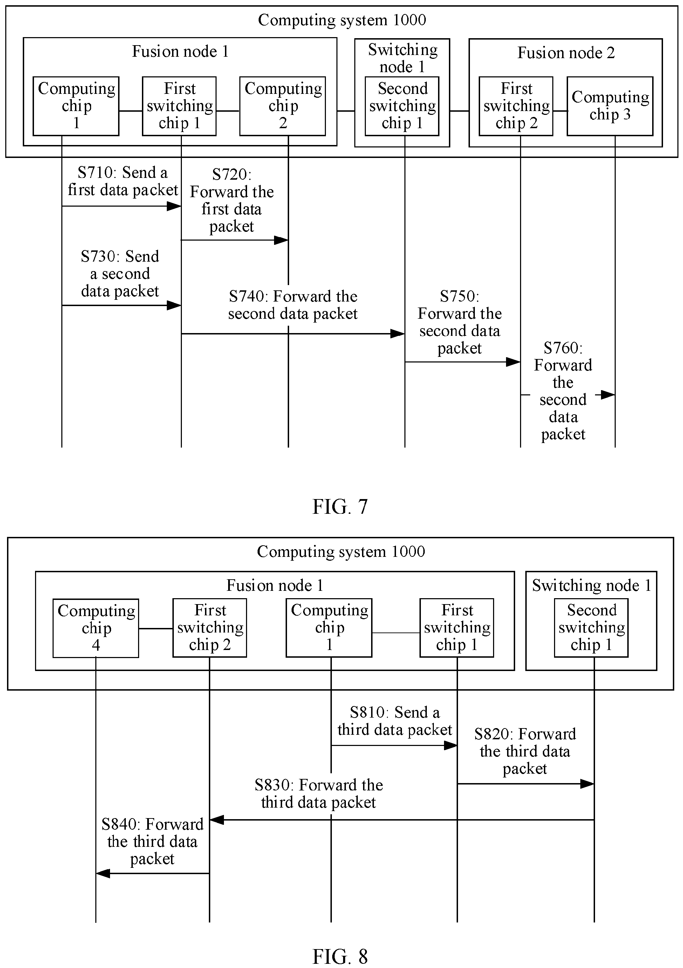

Architectures of the computing system provided in this application are separately described above with reference to FIG. 1 to FIG. 6A and FIG. 6B. Next, a process of data communication inside the computing system provided in this application is further explained with reference to FIG. 7 and FIG. 8.

FIG. 7 is a schematic diagram of a step procedure of a communication method in an application scenario according to this application. FIG. 8 is a schematic diagram of a step procedure of a communication method in another application scenario according to this application. A difference between FIG. 7 and FIG. 8 is: The application scenario of the communication method shown in FIG. 7 is a scenario in which computing chips are fully connected to first switching chips, and the application scenario of the communication method shown in FIG. 8 is that computing chips in a same fusion node are not fully connected to all first switching chips.

The communication methods shown in FIG. 7 and FIG. 8 may be applied to a computing system 1000. The computing system 1000 may be the computing system described in the embodiments in FIG. 1 to FIG. 6A and FIG. 6B. For example, the computing system may be the first cabinet 400 shown in FIG. 1 to FIG. 6 A and FIG. 6B, and a network topology structure of the computing system may be a network topology structure having a central switch, for example, a fat-tree network. The first cabinet 400 includes one or more fusion nodes and one or more switching nodes. Each fusion node includes one or more computing chips and at least one first switching chip, and each switching node includes one or more second switching chips. For details, refer to the descriptions in FIG. 1 to FIG. 6 A and FIG. 6B. This is not specifically limited in this application.

The method may include the following steps S710 to S760. It should be noted that step S710 and step S720 describe a step procedure of a communication method between computing chips in a same fusion node, and step S730 to step S760 describe a step procedure of a communication method between computing chips in different fusion nodes.

Step S710: A computing chip 1 sends a first data packet to a first switching chip 1. A destination address of the first data packet is an address of a computing chip 2. The computing chip 1, the computing chip 2, and the first switching chip 1 are chips in a fusion node 1. The fusion node 1 is encapsulated in a first case, and the computing chip 1 and the computing chip 2 are connected to the first switching chip 1.

It should be noted that, if a plurality of first switching chips are connected to the computing chip 1 serving as a transmit end, a plurality of paths with different overheads may exist between the computing chip 1 serving as the transmit end and the computing chip 2 serving as a receive end. A local routing table or MAC address table of the computing chip serving as the transmit end may determine an optimal forwarding path by using an algorithm such as load balancing, and the computing chip serving as the transmit end may query the local routing table or MAC address table to obtain the optimal forwarding path, to avoid network congestion. A routing algorithm or a switch forwarding algorithm for determining the optimal forwarding path is not specifically limited in this application.

With reference to FIG. 7, it can be learned that the computing chip 1 in the fusion node 1 is connected to the first switching chip 1, and the computing chip 2 is also connected to the first switching chip 1. Therefore, the first data packet sent by the computing chip 1 to the computing chip 2 may be forwarded through the first switching chip 1. Simply speaking, in a same fusion node, data communication between a computing chip serving as a transmitter and a computing chip serving as a receiver may be implemented through a first switching chip that establishes connections to both the transmitter and the receiver.

Step S720: The first switching chip 1 forwards the first data packet to the computing chip 2.

During specific implementation, after the computing chip 1 and the computing chip 2 establish communication connection to the first switching chip 1, the first switching chip 1 may record addresses of all computing chips connected to the first switching chip 1, and establish a routing table. The routing table records a plurality of transmission paths. Therefore, after receiving the data packet, the first switching chip 1 may query the routing table based on a source address and the destination address that are carried in the data packet. The algorithm used during the query may be the routing algorithm such as a routing information protocol (routing information protocol, RIP) or a border gateway protocol (border gateway protocol, BGP). This is not specifically limited in this application.

It should be understood that step S710 and step S720 describe the data communication procedure in the fusion node, and step S730 to step S760 describe the step procedure of the communication method between the computing chips in the different fusion nodes. If the computing chip 1 does not need to perform data communication with a computing chip in another fusion node, step S730 to step S760 may not be performed. If the computing chip 1 does not need to perform data communication with a computing chip in the same fusion node, step S710 and step S720 may not be performed, and step S730 to step S760 may be directly performed. Certainly, the computing chip 1 may alternatively perform step S730 to step S760 before step S710 and step S720. This is not specifically limited in this application.

During specific implementation, the computing chip 1 may be the computing chip C1 in the embodiment in FIG. 3, the computing chip 2 may be the computing chip C2 in the embodiment in FIG. 3, and the first switching chip 1 may be the first switching chip L12 in the embodiment in FIG. 3. For detailed descriptions of step S710 and step S720, refer to the step procedure in which the computing chip C1 and the computing chip C2 perform data communication in the embodiment in FIG. 3. Details are not described herein again.

Step S730: The computing chip 1 sends a second data packet to the first switching chip 1. A destination address of the second data packet is an address of a computing chip 3, the computing chip 1 is a computing chip in the fusion node 1, and the computing chip 3 is a computing chip in a fusion node 2.

Step S740: The first switching chip 1 forwards the second data packet to a second switching chip 1 in a switching node 1.

It should be understood that, with reference to the descriptions of the embodiments in FIG. 1 to FIG. 6 A and FIG. 6B, it can be learned that communication connection is established between a fusion node and a switching node through a connector, and the connector is a backplane-free orthogonal connector. Therefore, the first switching chip 1 can establish communication connection to the second switching chip 1. In this case, after receiving the second data packet carrying the address of the computing chip 3, the first switching chip 1 may determine, based on the address of the computing chip 3 and the routing table, that a next-hop address is an address of the switching node 1, and send the address of the second data packet to the switching node 1.

With reference to the foregoing content, it can be learned that, in each fusion node, each second switching chip may establish communication connection to all first switching chips. In this way, there are a large quantity of data communication paths, and any computing chip can find a communication path that enables a communication bandwidth to reach a bandwidth requirement. Therefore, the second switching chip 1 may be determined by the switching node 1 based on idle statuses of all second switching chips in the node.

Step S750: The second switching chip 1 forwards the second data packet to a first switching chip 2 of the fusion node 2.

With reference to the foregoing content, it can be learned that a first switching chip in each fusion node establishes communication connection to each second switching chip, and the second switching chip 1 is connected to the first switching chip 1 and the first switching chip 2. Therefore, the second switching chip 1 may forward, based on the address of the computing chip 3 carried in the second data packet, the second data packet to the fusion node 2 in which the computing chip 3 is located.

Step S760: The first switching chip 2 forwards the second data packet to the computing chip 3.

It should be understood that the first switching chip in the fusion node may forward the second data packet to the computing chip 3 in the same node based on the address of the computing chip 3 carried in the received second data packet.

During specific implementation, the computing chip 1 may be the computing chip C1 in the embodiment in FIG. 3, the computing chip 3 may be the computing chip C3 in the embodiment in FIG. 3, the first switching chip 1 may be the first switching chip L12 in the embodiment in FIG. 3, the first switching chip 2 may be the first switching chip L14 in the embodiment in FIG. 3, and the second switching chip 1 may be the second switching chip L23 in the embodiment in FIG. 3. For detailed descriptions of step S730 to step S760, refer to the step procedure in which the computing chip C1 and the computing chip C3 perform data communication in the embodiment in FIG. 3. Details are not described herein again.

It should be understood that in step S710 and step S720, the computing chip 1 and the computing chip 2 are connected to the same first switching chip 1. Therefore, when the computing chip 1 and the computing chip 2 perform the data communication, the data packet may be forwarded through the first switching chip 1. With reference to the foregoing content, it can be learned that each first switching chip in a fusion node may be connected to all computing chips in the same node, or each first switching chip may be connected to a part of the computing chips. In this case, there may be a case in which the computing chip 1 serving as a transmit end and a computing chip 4 serving as a receive end are separately connected to different first switching chips. The following describes, with reference to FIG. 8, a communication method between computing chips in a same fusion node in this case.

FIG. 8 is a schematic diagram of a step procedure of a communication method in another application scenario according to this application. In the application scenario shown in FIG. 8, a computing chip serving as a transmit end and a computing chip serving as a receive end are connected to different first switching chips. As shown in FIG. 8, the method may include the following steps.

Step S810: A computing chip 1 sends a third data packet to a first switching chip 1. A destination address of the third data packet is an address of a computing chip 4. The computing chip 4 and the computing chip 1 are computing chips in a fusion node 1. In addition, the computing chip 1 is connected to the first switching chip 1, and the computing chip 4 is connected to a first switching chip 2.

Step S820: The first switching chip 1 forwards the third data packet to a second switching chip 1 of a switching node 1.

It should be understood that there is no communication connection between the first switching chip 1 and the first switching chip 2. However, each second switching chip may establish communication connection to each first switching chip. The first switching chip 1 may forward the third data packet to the second switching chip 1. Then, the second switching chip 1 forwards the third data packet to the first switching chip 2.

Step S830: The second switching chip 1 forwards the third data packet to the first switching chip 2.

Step S840: The first switching chip 2 forwards the third data packet to the computing chip 4.

During specific implementation, the first switching chip 1 may be the first switching chip L12 in FIG. 3, the first switching chip 2 may be the first switching chip L11 in FIG. 3, the computing chip 1 may be the computing chip C1 in FIG. 3, the computing chip 4 may be the computing chip C4 in FIG. 3, and the second switching chip 1 may be the second switching chip L23 in FIG. 3. For descriptions of step S810 to step S840, refer to the step procedure of the data communication between the computing chip C1 and the computing chip C4 in the embodiment in FIG. 3. Details are not described herein again.

Simply speaking, for data communication between computing chips in a same fusion node, if a computing chip serving as a transmit end and a computing chip serving as a receive end are connected to a same first switching chip, the data communication between the transmit end and the receive end may be implemented through the first switching chip. If the computing chip serving as the transmit end and the computing chip serving as the receive end are connected to different first switching chips, the transmit end may forward a data packet to a second switching chip through the first switching chip connected to the transmit end, the second switching chip forwards the data packet to the first switching chip connected to the receive end, and the first switching chip connected to the receive end forwards the data packet to the receive end.

It should be understood that the communication methods described in FIG. 7 and FIG. 8 are used when a computer cluster is a two-layer fat-tree network. If the computer cluster forms a fat-tree network of more than two layers, for example, the four-layer fat-tree network shown in FIG. 4, data communication between different cabinets may further be implemented through a third switching chip.

The embodiment in FIG. 4 is still used as an example. If the computing chip 1 in the first case 1 in the first cabinet 1 sends a data packet to the computing chip 1 in the first case 1 in the first cabinet m, the data packet needs to pass through the first switching chip L1-1 in the first case 1 in the first cabinet 1, then pass through the second switching chip L2-1 in the first cabinet 1 (certainly, which may alternatively be another second switching chip in the same cabinet, this is not specifically limited in this application), pass through the third switching chip L3-1 in the second cabinet 1 (certainly, which may alternatively be any third switching chip in any second cabinet), passes through the second switching chip L2-1 of the second case 1 in the first cabinet m (which may alternatively be any second switching chip in the first cabinet m), and finally passes through the first switching chip L1-1 of the first case 1 in the first cabinet m, and is finally transmitted to the computing chip 1 of the first case 1 in the first cabinet m.

In conclusion, if a first switching chip is directly connected between the computing chip serving as the transmit end and the computing chip serving as the receive end, the data communication may be implemented between the transmit end and the receive end through the directly connected first switching chip. If no first switching chip is directly connected between the transmit end and the receive end, the data communication is implemented through a second switching chip directly connected to first switching chips connected to the transmit end and the receive end. If no second switching chip is directly connected between the first switching chips connected to the transmit end and the receive end, two second switching chips connected to second switching chips connected to the first switching chips connected to the transmit end and the receive end may be determined, and the data communication is implemented through a third switching chip connected to the two second switching chips, and so on. Examples are not described one by one herein.

Further, if the computer cluster includes a plurality of switching planes, with reference to the embodiments in FIG. 5 and FIG. 6 A and FIG. 6B, it can be learned that each switching plane has a corresponding first switching chip and a corresponding second switching chip. If a quantity of network layers of the computer cluster is more than 2, each switching plane also has a corresponding third switching chip. When performing data communication on different switching planes, computing chips may implement the data communication through a first switching chip, a second switching chip, and a third switching chip that correspond to the switching planes. For a communication method, refer to the related descriptions of the communication methods shown in FIG. 7 and FIG. 8. Details are not described herein again.

During specific implementation, if a user needs a plurality of switching planes with network isolation, switching chips on different switching planes are not connected or shared. If the user does not need the network isolation, but only expects the different switching planes to process different services or use different communication protocols, the switching chips on the different switching planes may be connected or shared, and a data packet generated by a computing chip may carry an identifier of a switching plane. For example, when data communication is performed on a first switching plane, the data packet generated by the computing chip may carry an identifier of the first switching plane. In this way, when receiving the data packet, a first switching chip may determine, based on the identifier, whether to forward the data packet. If a switching chip on a second switching plane receives the data packet that carries the identifier of the first switching plane, the switching chip may not process the data packet.

It should be noted that, when the computing system is a chassis server, for a communication procedure in the computing system, refer to the descriptions of the embodiments in FIG. 7 and FIG. 8. Details are not described herein again.

In conclusion, this application provides a communication method, applied to a computer cluster. The computer cluster includes a plurality of first cabinets, and each first cabinet includes a plurality of fusion nodes and a plurality of switching nodes. A first fusion node in the plurality of fusion nodes includes a plurality of computing chips and at least one first switching chip. The at least one first switching chip is configured to implement communication connection between the plurality of computing chips. A first switching node is configured to implement communication connection between the first fusion node and another fusion node in the plurality of fusion nodes. The first switching node in the plurality of switching nodes is coupled to the first fusion node through a connector, and the plurality of computing chips in the first fusion node are connected to the first switching chip. In this case, even when a quantity of computing chips connected to the first switching chip is reduced, a quantity of computing chips in the entire cabinet may be increased by increasing a quantity of first switching chips. After the quantity of computing chips connected to each first switching chip is reduced, a bandwidth that can be allocated to each computing chip may be increased. In this way, an available bandwidth of each computing chip is increased while a scale of the computer cluster is expanded, to resolve a performance bottleneck problem of the computer cluster.

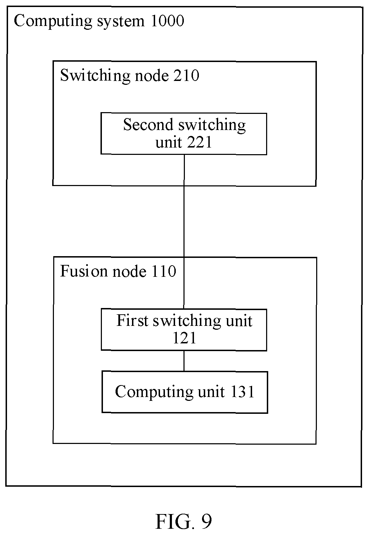

FIG. 9 is a schematic diagram of a structure of a computing system according to this application. The computing system 1000 may be the computing system described in the embodiments in FIG. 1 and FIG. 8. The computing system 1000 may include a switching node 210 and a fusion node 110. The switching node 210 includes a second switching unit 221. The fusion node 110 includes a computing unit 131 and a first switching unit 121. A plurality of fusion nodes 110 are coupled to a plurality of switching nodes 210 through connectors. Although only one switching node 210 and one fusion node 110 are drawn in the computing system in FIG. 9, during specific implementation, there may be the plurality of fusion nodes 110 and the plurality of switching nodes 210. This is not specifically limited in this application.

A computing unit 131 of the fusion node 110 is configured to: process a computing task, and generate a data packet. A source address of the data packet is an address of a first computing chip in the fusion node, and a destination address is an address of a second computing chip. A first switching unit 121 of the fusion node 110 forwards the data packet to the destination address through the first switching chip in the fusion node when the second computing chip is a computing chip in the fusion node. The first switching unit 121 is configured to: when the second computing chip is a computing chip outside the fusion node, forward the data packet to a first switching node, so that the first switching node forwards the data packet to the destination address.

During specific implementation, the computing unit 131 may be implemented by using the computing chip 130 in the embodiments in FIG. 1 to FIG. 8, and the computing unit 131 may perform step S710 and step S730 in the embodiment in FIG. 7 and step S810 in the embodiment in FIG. 8. The first switching unit 121 may be implemented by using the first switching chip 120 in the embodiments in FIG. 1 to FIG. 8. The first switching unit 121 may perform step S720, step S740, and step S760 in the embodiment in FIG. 7, and may further perform step S820 and step S840 in the embodiment in FIG. 8. The second switching unit 221 may be implemented by using the second switching chip 220 in the embodiments in FIG. 1 to FIG. 8. The second switching unit 221 may perform step S750 in the embodiment in FIG. 7 and step S830 in the embodiment in FIG. 8.

The second switching unit 221 of the switching node 210 is configured to receive a data packet sent by a first switching chip of the first fusion node in the plurality of fusion nodes 110. A source address of the data packet is an address of the first switching chip of the first fusion node, and a destination address is an address of a second computing chip in a second fusion node. The second switching unit 221 is configured to forward the data packet to a first switching chip of the second fusion node 110, so that the first switching chip forwards the data packet to the second computing chip. The second fusion node 110 includes the first switching chip and a computing chip.

In a possible implementation, a connection manner between the fusion node 110 and the switching node 210 is orthogonal connection, and the connector includes a backplane-free orthogonal connector or an optical blind-mate connector.

In a possible implementation, the connector includes a high-speed connector, and the orthogonal connection between the fusion node and the first switching node is implemented by twisting the high-speed connector by 90 degrees.

In a possible implementation, the fusion node 110 includes a first switching chip on a first switching plane and a first switching chip on a second switching plane. The first switching unit 121 is configured to: when the data packet carries an identifier of the first switching plane, forward the data packet through the first switching chip on the first switching plane. The first switching unit 121 is configured to: when the data packet carries an identifier of the second switching plane, forward the data packet through the first switching chip on the second switching plane.

In a possible implementation, the first switching plane and the second switching plane are switching planes with network isolation; the first switching plane and the second switching plane bear different services; or the first switching plane and the second switching plane use different communication protocols.

In a possible implementation, a network topology structure including the plurality of fusion nodes 110 and the plurality of switching nodes 210 includes a network topology structure having no central switching node and a network topology structure having a central switching node. The network topology structure having no central switching node may include but is not limited to a dragonfly network, a dragonfly+ network, a torus network, and the like. The network topology structure having the central switching node may include, but is not limited to, a fat-tree network. For details, refer to the related descriptions of the network topology structure having no central switching node and the network topology structure having the central switching node in the foregoing content. Details are not described herein again.

In a possible implementation, when the network topology structure is the network topology structure having no central switching node, the switching nodes are configured to implement communication connection between a plurality of computing systems. When the network topology structure is the network topology structure having the central switching node, the communication connection between the plurality of computing systems is implemented through the central switching node.

In a possible implementation, quantities of fusion nodes and switching nodes in the computing system are determined based on a bandwidth requirement of the computing chip, a quantity of ports and a switching capacity of the first switching chip, and a quantity of ports and a switching capacity of the first switching node.

In conclusion, this application provides a computing system. The system includes a plurality of fusion nodes and a plurality of switching nodes. A first fusion node in the plurality of fusion nodes includes a plurality of computing chips and at least one first switching chip. The at least one first switching chip is configured to implement communication connection between the plurality of computing chips. A first switching node is configured to implement communication connection between the first fusion node and another fusion node in the plurality of fusion nodes. The first switching node in the plurality of switching nodes is coupled to the first fusion node through a connector, and the plurality of computing chips in the first fusion node are connected to the first switching chip. In this case, even when a quantity of computing chips connected to the first switching chip is reduced, a quantity of computing chips in the entire cabinet may be increased by increasing a quantity of first switching chips. After the quantity of computing chips connected to each first switching chip is reduced, a bandwidth that can be allocated to each computing chip may be increased. In this way, an available bandwidth of each computing chip is increased while a scale of a computer cluster is expanded, to resolve a performance bottleneck problem of the computer cluster.

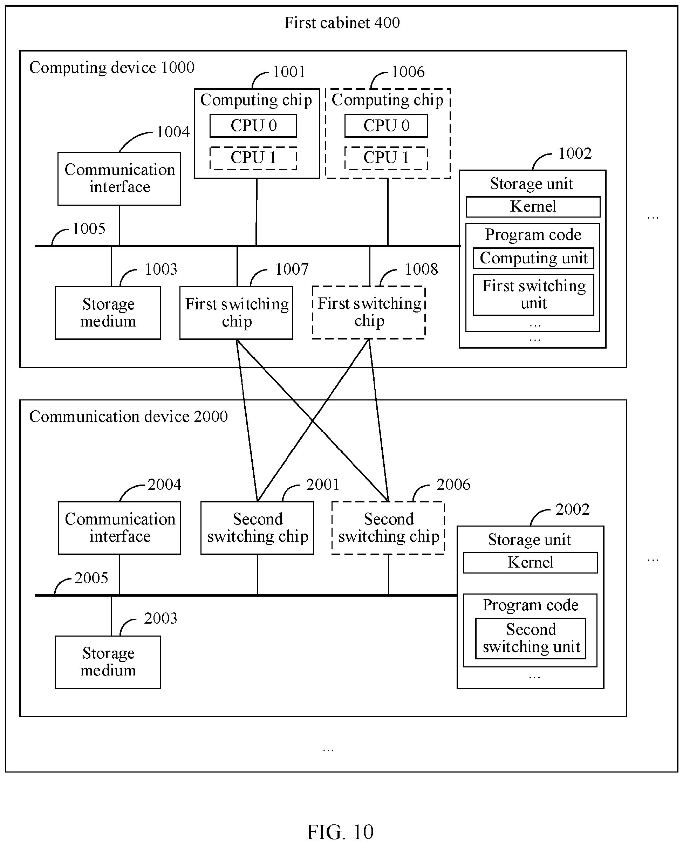

FIG. 10 is a schematic diagram of a structure of a computing system according to this application. The computing system 10000 may be the computing system in the embodiments in FIG. 1 to FIG. 9, for example, the first cabinet 400 in FIG. 1 to FIG. 9. The computing system 10000 includes a plurality of computing devices 1000 and a plurality of communication devices 2000.

Further, the computing device 1000 includes a computing chip 1001, a storage unit 1002, a storage medium 1003, a communication interface 1004, and a first switching chip 1007. The computing chip 1001, the storage unit 1002, the storage medium 1003, the communication interface 1004, and the first switching chip 1007 perform communication through a bus 1005, or implement the communication by using another means, for example, wireless transmission.

The computing chip 1001 includes at least one general-purpose processor, for example, a CPU, an NPU, or a combination of the CPU and a hardware chip. The hardware chip may be an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field-programmable logic gate array (Field-Programmable Gate Array, FPGA), generic array logic (Generic Array Logic, GAL), or any combination thereof. The computing chip 1001 executes various types of digital storage instructions, for example, a software or firmware program stored in the storage unit 1002, so that the computing device 1000 provides various services of a wide range.

During specific implementation, in an embodiment, the computing chip 1001 includes one or more CPUs, for example, a CPU 0 and a CPU 1 shown in FIG. 10.

During specific implementation, in an embodiment, the computing device 1000 also includes a plurality of computing chips, for example, the computing chip 1001 and a computing chip 1006 shown in FIG. 10. Each of the computing chips may be a single-core processor (single-CPU) or a multi-core processor (multi-CPU). The processor herein refers to one or more devices, circuits, and/or processing cores configured to process data (for example, computer program instructions).

The first switching chip 1007 is a switching chip of a switch, and includes at least one general-purpose processor. The switching chip may be an ASIC, a PLD, or a combination thereof. The PLD may be a CPLD, an FPGA, a GAL, or any combination thereof. The first switching chip 1007 may execute the software or firmware program stored in the storage unit 1002, to implement data communication between the computing chips in the computing device 1000.

During specific implementation, in an embodiment, the computing device 1000 also includes at least one first switching chip, for example, the first switching chip 1007 and a first switching chip 1008 shown in FIG. 6 A and FIG. 6B.

The storage unit 1002 is configured to store program code, and execution of the program code is controlled by the computing chip 1001, to perform the step processed by the computing chip in any one of the foregoing embodiments in FIG. 1 to FIG. 9. The program code includes one or more software units. The one or more software units are computing units in the embodiment in FIG. 9. The computing unit is configured to: process a computing task, and generate a data packet. The computing unit is configured to perform step S710, step S730, and an optional step thereof in the embodiment in FIG. 7, and step S810 and an optional step thereof in the embodiment in FIG. 8.

The storage unit 1002 is further configured to store program code, and execution of the program code is controlled by the first switching chip 1007, to perform the step processed by the first switching chip in any one of the foregoing embodiments in FIG. 1 to FIG. 9. The program code includes one or more software units. The one or more software units are the first switching units in the embodiment in FIG. 9. The first switching unit is configured to: when a destination address of the data packet is an address of a computing chip in a fusion node, forward a data communication request to the destination address. The first switching unit is further configured to: when the destination address of the data packet is an address of a computing chip outside the fusion node, forward the data packet to a switching node, so that the switching node forwards the data packet to the destination address. The first switching unit is configured to perform step S720, step S740, step S760, and an optional step thereof in the embodiment in FIG. 7, and step S820, step S840, and an optional step thereof in the embodiment in FIG. 8. Details are not described herein again.

Further, the communication device 2000 includes a second switching chip 2001, a storage unit 2002, a storage medium 2003, and a communication interface 2004. The second switching chip 2001, the storage unit 2002, the storage medium 2003, and the communication interface 2004 perform communication through a bus 2005, or implement the communication by using another means, for example, wireless transmission.

The second switching chip 2001 is a switching chip of a switch, and includes at least one general-purpose processor. The switching chip may be an ASIC, a PLD, or a combination thereof. The PLD may be a CPLD, an FPGA, a GAL, or any combination thereof.

During specific implementation, in an embodiment, the communication device 2000 includes a plurality of second switching chip 2001, for example, the second switching chip 2001 and a second switching chip 2006 shown in FIG. 10.

The storage unit 2002 is configured to store program code, and execution of the program code is controlled by the second switching chip 2001, to perform the step processed by the second switching chip in any one of the foregoing embodiments in FIG. 1 to FIG. 9. The program code includes one or more software units. The one or more software units are the second switching units in the embodiment in FIG. 9. The second switching unit is configured to: receive a data packet sent by a first switching chip of a first fusion node in a plurality of fusion nodes, and forward the data packet to a first switching chip of a second fusion node, so that the first switching chip of the second fusion node forwards the data packet to a second computing chip. A source address of the data packet is an address of a first computing chip of the first fusion node, and a destination address is an address of the second computing chip of the second fusion node. The second switching unit is configured to perform step S740, step S750, and an optional step thereof in the embodiment in FIG. 7, and is further configured to perform step S830 and an optional step thereof in the embodiment in FIG. 8. Details are not described herein again.

The storage unit 1002 and the storage unit 2002 each include a read-only memory, a random access memory, a volatile memory, or a non-volatile memory, or include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), which is used as an external cache. By way of example rather than limitative description, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). Alternatively, a hard disk (hard disk), a USB flash drive (universal serial bus, USB), a flash memory (flash), an SD card (secure digital memory Card, SD card), a memory stick, or the like is used. The hard disk is a hard disk drive (hard disk drive, HDD), a solid-state drive (solid state disk, SSD), a mechanical hard disk (mechanical hard disk, HDD), or the like. This is not specifically limited in this application.

The storage medium 1003 and the storage medium 2003 are carriers for storing data, for example, a hard disk (hard disk), a USB flash drive (universal serial bus, USB), a flash memory (flash), an SD card (secure digital memory Card, SD card), a memory stick, or the like. The hard disk may be a hard disk drive (hard disk drive, HDD), a solid-state drive (solid state disk, SSD), a mechanical hard disk (mechanical hard disk, HDD), or the like. This is not specifically limited in this application.

The communication interface 1004 and the communication interface 2004 each are a wired interface (for example, an Ethernet interface), and are an internal interface (for example, a high-speed serial computer extended bus (Peripheral Component Interconnect express, PCIe) bus interface), a wired interface (for example, an Ethernet interface), or a wireless interface (for example, a cellular network interface or a wireless local area network interface) for communicating with another server or unit.

The bus 2005 and the bus 1005 each are a peripheral component interconnect express (Peripheral Component Interconnect Express, PCIe) bus, an extended industry standard architecture (extended industry standard architecture, EISA) bus, a unified bus (unified bus, Ubus or UB), a computer express link (compute express link, CXL), or a cache coherent interconnect for accelerators (cache coherent interconnect for accelerators, CCIX). This is not specifically limited in this application. The bus 2005 and the bus 1005 are classified into an address bus, a data bus, a control bus, or the like.

The bus 2005 and the bus 1005 each may further include a power bus, a control bus, a status signal bus, and the like in addition to the data bus. However, for clarity of description, various buses are marked as the bus 2005 and the bus 1005 in the figure.

In this embodiment of this application, the first switching chip 1007 in the computing device 1000 is coupled to the second switching chip 2001 in the communication device 2000 through a connector, and each second switching chip 2001 establishes communication connection to each first switching chip 1007 in an orthogonal connection manner. For details, refer to the foregoing content. Details are not described herein again. The connector includes but is not limited to a backplane-free orthogonal connector, an optical blind-mate connector, and a high-speed connector. The high-speed connector needs to first use cables to implement flexible connections between the computing device 1000, the communication device 2000, and the high-speed connector. Then, the high-speed connector is twisted by 90 degrees to implement an orthogonal connection between a switching node 210 and a fusion node 110.

It should be noted that FIG. 10 is only a possible implementation of embodiments of this application. During actual application, the computing system 10000 may alternatively include more or fewer components. This is not limited herein. For content that is not shown or not described in this embodiment of this application, refer to the related descriptions in the embodiments in FIG. 1 to FIG. 9. Details are not described herein again.

An embodiment of this application provides a computer cluster, including the computing system shown in FIG. 10. There is communication connection between a plurality of computing systems to process a task in a cooperative manner. Each computing system may establish communication connection to a central switching node (for example, the second cabinet in the foregoing content), and each central switching node is configured to implement communication connection between the computing systems. A network topology structure including the plurality of computing system and a plurality of central switching nodes may be the network topology structure having the central switching node in the foregoing content, for example, a fat-tree network. For content that is not shown or not described in this embodiment of this application, refer to the related descriptions in the embodiments in FIG. 1 to FIG. 9. Details are not described herein again.

An embodiment of this application provides another computer cluster, including the computing system shown in FIG. 10. There is communication connection between a plurality of computing systems to process a task in a cooperative manner. The communication connection between the computing systems is implemented through switching nodes in the computing systems. A network topology structure including the plurality of computing systems may be the network topology structure having no central switching node in the foregoing content, for example, a dragonfly network, a dragonfly+ network, a torus network, or the like. For content that is not shown or not described in this embodiment of this application, refer to the related descriptions in the embodiments in FIG. 1 to FIG. 9. Details are not described herein again.

An embodiment of this application further provides a computing device. The computing device includes a processor and a power supply circuit. The power supply circuit is configured to supply power to the processor. The processor is configured to implement functions of the operation steps performed by the fusion node in the embodiments shown in FIG. 1 to FIG. 9.

All or some of the foregoing embodiments may be implemented by using software, hardware, firmware, or any combination thereof. When the software is used to implement the embodiments, all or some of the foregoing embodiments may be implemented in a form of a computer program product. The computer program product includes at least one computer instruction. When the computer program instructions are loaded or executed on a computer, procedure or functions according to embodiments of the present invention are all or partially generated. The computer is a general-purpose computer, a dedicated computer, a computer network, or another programmable apparatus. The computer instructions are stored in a computer-readable storage medium, or may be transmitted from a computer-readable storage medium to another computer-readable storage medium. For example, the computer instructions are transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium is any usable medium that can be accessed by the computer, or a data storage node including at least one usable media set, for example, a server or a data center. The usable medium may be a magnetic medium (for example, a floppy disk, a hard disk drive, or a magnetic tape), an optical medium (for example, a high-density digital video disc (digital video disc, DVD)), or a semiconductor medium. The semiconductor medium is an SSD.

The foregoing descriptions are merely specific implementations of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A computing system, wherein the computing system comprises a plurality of fusion nodes and a plurality of switching nodes;
a first fusion node comprises a plurality of computing chips and at least one first switching chip, the first fusion node is one of the plurality of fusion nodes, and the at least one first switching chip is configured to implement communication connection between the plurality of computing chips; and
a first switching node in the plurality of switching nodes is coupled to the first fusion node through a connector, and the first switching node is configured to implement communication connection between the first fusion node and another fusion node in the plurality of fusion nodes.

2. The system according to claim 1, wherein a coupling manner between the first fusion node and the first switching node is orthogonal connection, and the connector comprises a backplane-free orthogonal connector or an optical blind-mate connector.

3. The system according to claim 1 or 2, wherein the connector comprises a high-speed connector, and the orthogonal connection between the first fusion node and the first switching node is implemented by twisting the high-speed connector by 90 degrees.

4. The system according to any one of claims 1 to 3, wherein a network topology structure consisting of the plurality of computing chips, the at least one first switching chip, and the plurality of first switching nodes comprises a network topology structure having no central switching node and a network topology structure having a central switching node.

5. The system according to claim 4, wherein
when the network topology structure is the network topology structure having no central switching node, the switching nodes are configured to implement communication connection between a plurality of computing systems; and
when the network topology structure is the network topology structure having the central switching node, the communication connection between the plurality of the computing systems is implemented through the central switching node.

6. The system according to any one of claims 1 to 5, wherein quantities of the plurality of fusion nodes and the plurality of switching nodes in the computing system are determined based on at least one of a bandwidth requirement of the computing chip, a quantity of ports and a switching capacity of the first switching chip, and a quantity of ports and a switching capacity of the first switching node.

7. The system according to any one of claims 1 to 6, wherein the at least one first switching chip comprises a first switching chip on a first switching plane and a first switching chip on a second switching plane, the first switching node comprises a plurality of second switching chips, the plurality of second switching chips comprise a second switching chip on the first switching plane and a second switching chip on the second switching plane, and the first switching plane and the second switching plane bear different services.

8. The system according to claim 7, wherein
the first switching plane and the second switching plane are switching planes with network isolation; or
the first switching plane and the second switching plane use different communication protocols.

9. A communication method, wherein the method is applied to a computing system, the computing system comprises a plurality of fusion nodes and a plurality of switching nodes, a first switching node in the plurality of switching nodes is coupled to a first fusion node through a connector, and the first switching node is configured to implement a communication connection between the first fusion node and another fusion node in the plurality of fusion nodes, the first fusion node in the plurality of fusion nodes comprises a plurality of computing chips and at least one first switching chip, the at least one first switching chip is configured to implement a communication connection between the plurality of computing chips, and the method comprises:
generating, by a first computing chip of the first fusion node, a data packet, wherein a destination address of the data packet is an address of a second computing chip; and
forwarding, by the first fusion node, the data packet based on an address of a fusion node in which the second computing chip is located.

10. The method according to claim 9, wherein the forwarding, by the first fusion node, the data packet based on an address of a fusion node in which the second computing chip is located comprises:
when the second computing chip is a computing chip in the first fusion node, forwarding, by the first fusion node, the data packet to the destination address through the at least one first switching chip; and
when the second computing chip is a computing chip in a second fusion node, sending, by the first fusion node, the data packet to the first switching node in the plurality of switching nodes; and sending, by the first switching node, the data packet to the second fusion node.

11. The method according to claim 9 or 10, wherein a connection manner between the plurality of fusion nodes and the plurality of switching nodes is orthogonal connection, and the connector comprises a backplane-free orthogonal connector or an optical blind-mate connector.

12. The method according to any one of claims 9 to 11, wherein the connector comprises a high-speed connector, and the orthogonal connection between the plurality of fusion nodes and the plurality of switching nodes is implemented by twisting the high-speed connector by 90 degrees.

13. The method according to any one of claims 9 to 12, wherein a network topology structure consisting of the plurality of fusion nodes and the plurality of switching nodes comprises a network topology structure having no central switching node and a network topology structure having a central switching node.

14. The method according to claim 13, wherein
when the network topology structure is the network topology structure having no central switching node, communication connection between a plurality of computing systems is implemented through the switching nodes; and
when the network topology structure is the network topology structure having the central switching node, the communication connection between the plurality of computing systems is implemented through the central switching node.

15. The method according to any one of claims 9 to 14, wherein quantities of the fusion nodes and the switching nodes in the computing system are determined based on a bandwidth requirement of the computing chip, a quantity of ports and a switching capacity of the first switching chip, and a quantity of ports and a switching capacity of the first switching node.

16. The method according to any one of claims 9 to 15, wherein the at least one first switching chip comprises a first switching chip on a first switching plane and a first switching chip on a second switching plane, the first switching node comprises a plurality of second switching chips, the plurality of second switching chips comprise a second switching chip on the first switching plane and a second switching chip on the second switching plane, and the first switching plane and the second switching plane bear different services.

17. The method according to claim 16, wherein
the first switching plane and the second switching plane are switching planes with network isolation; or
the first switching plane and the second switching plane use different communication protocols.
